# EUROPÄISCHE PATENTSCHRIFT

(11) **EP 2 709 933 B1**
(45) Veröffentlichungstag und Bekanntmachung des Hinweises auf die Patenterteilung: **01.04.2020**
(21) Anmeldenummer: 12740865.6
(22) Anmeldetag: 16.05.2012
(51) Int. Cl.: B65G 1/04, B65G 1/06

(54) **REGALLAGERSYSTEM**
RACK STORE SYSTEM
SYSTÈME D'ENTREPÔT À RAYONNAGES

(30) Priorität: 17.05.2011 AT 7032011
(43) Veröffentlichungstag der Anmeldung: 26.03.2014
(73) Patentinhaber: TGW Mechanics GmbH, 4600 Wels (AT)
(72) Erfinder: WOLKERSTORFER, Christoph, A-4600 Wels (AT); REITER, Otto, A-4600 Wels (AT)
(74) Vertreter: Burger, Hannes
(86) Internationale Anmeldenummer: PCT/AT2012/050071
(87) Internationale Veröffentlichungsnummer: WO 2012/155169

(56) Entgegenhaltungen:
- AT-A4- 508 361
- JP-A- 63 031 919
- JP-A- 2003 012 119
- JP-U- 48 096 687
- JP-U- 61 191 323
- US-A1- 2010 316 468
- "LICHTE TOT ZWARE KOLOMZWENKKRANEN", TRANSPORT EN OPSLAG, REED BUSINESS INFORMATION, DOETINCHEM, NL, Bd. 13, Nr. 6, 26. Mai 1989 (1989-05-26), Seite 34, XP000007858, ISSN: 0165-330X

## Beschreibung

Die Erfindung betrifft ein Regallagersystem, wie im Oberbegriff des Anspruches 1 beschrieben.

Die US 2010/0322746 A1, US 2010/0316468 A1 bzw. US 2009/0074545 A1 offenbart ein Regallagersystem mit einem Regallager mit benachbart zueinander angeordneten Lagerregalen, zwischen denen sich zumindest eine Regalgasse erstreckt und welche in übereinander liegenden Regalebenen Stellplätze für Ladegüter aufweisen, und in den Regalebenen entlang der Regalgasse verlaufenden Führungsbahnen und zumindest einem entlang der Führungsbahnen verfahrbaren, autonomen Förderfahrzeug zum Transport der Ladegüter und zumindest einer Ladegut-Manipulationsvorrichtung. Die Ladegut-Manipulationsvorrichtung umfasst eine Umlauffördervorrichtung mit entlang einer geschlossenen Förderumlaufbahn bewegbaren Tragrahmen für Ladegüter sowie in einer Horizontalebene vor dem Regallager aufgestellten Puffervorrichtungen für Ladegüter. Die Tragrahmen und die Puffervorrichtungen bilden jeweils einen Basisteil und an diesem vorragende Aufnahmeteile aus, wobei die Aufnahmeteile dergestalt angeordnet sind, dass diese auf der Relativbewegung zwischen den Tragrahmen und den Puffervorrichtungen komplementär ineinander greifen und dabei Ladegüter von den Puffervorrichtungen auf die Tragrahmen oder von den Tragrahmen auf die Puffervorrichtungen abgeben.

Die JP 2003/012119 A offenbart ein Regallagersystem nach dem Oberbegriff des Anspruchs 1 mit Lagerregalen und je Lagerregal in einer Regalgasse auf Führungsbahnen in übereinander liegenden Regalebenen verfahrbaren Förderfahrzeugen und einer ersten Ladegut-Manipulationsvorrichtung zum Einlagern von Ladegütern sowie einer zweiten Ladegut-Manipulationsvorrichtung zum Auslagern von Ladegütern. Die zweite Ladegut-Manipulationsvorrichtung umfasst eine Umlauffördervorrichtung mit entlang einer geschlossenen Förderumlaufbahn bewegbaren Tragrahmen für Ladegüter und in der jeweiligen Regalebene gegenüber einer Horizontalebene schwenkbare Umsetzvorrichtungen, von welchen Ladegüter auf die Tragrahmen abgegeben werden können.

Die DE 2 114 705 A und DE 10 2009 032 406 A1 beschreiben ein Regallagersystem mit einem Regallager mit benachbart zueinander angeordneten Lagerregalen und in den Regalebenen entlang einer Regalgasse zwischen den Regallagern verlaufenden Führungsbahnen und entlang der Führungsbahnen in den Regalebenen verfahrbaren, autonomen Förderfahrzeugen zum Transport der Ladegüter sowie einem Vertikal-Umlaufförderer. Der Vertikal-Umlaufförderer umfasst entlang einer geschlossenen Förderumlaufbahn bewegbare Tragrahmen, mittels welcher entweder die Förderfahrzeuge oder die Ladegüter in vertikaler Richtung zwischen den Regalebenen gefördert werden können. Nach der DE 10 2009 032 406 A1 ist der Vertikal-Umlaufförderer zwischen einer Vorzonen-Fördertechnik und einer stationären Hebevorrichtung für die Förderfahrzeuge angeordnet, wobei auf der Vorzonen-Fördertechnik angeförderte Ladegüter von den Tragrahmen übernommen und an die an der Hebevorrichtung wartenden Förderfahrzeuge abgegeben werden.

Ein Lager- und Kommissioniersystem ist aus der DE 10 2006 023 477 A1 bekannt, umfassend einen Kommissionierbereich zum Kommissionieren von Artikeln, ein unterhalb und/oder oberhalb des Kommissionierbereiches angeordnetes Regallagersystem für die Artikel und eine vertikal ausgerichtete Umlauffördervorrichtung, die den Kommissionierbereich mit dem Lagerbereich verbindet, um die Artikel zwischen dem Lagerbereich und dem Kommissionierbereich zu fördern. Im Regallagersystem sind entlang einer Regalgasse zwischen Regallagern in übereinander angeordneten Regalebenen verlaufenden und auf Führungsbahnen verfahrbare, autonome Förderfahrzeuge zum Transport von Ladegütern, beispielsweise Behältern, in welchen die Artikel aufbewahrt sind, vorgesehen. Das Regallager bildet in der jeweiligen Regalebene, auf einem der Umlauffördervorrichtung benachbarten Regalfach einen Pufferplatz aus, von welchem durch eine Übergabevorrichtung Artikel entnommen und an einen Tragrahmen der Umlauffördervorrichtung abgegeben werden. Die Beschickung des Pufferplatzes mit Artikel erfolgt durch ein Förderfahrzeug, welches zuvor den Artikel aus dem Regallager auslagert.

Der vorliegenden Erfindung liegt die Aufgabe zugrunde, ein Regallagersystem zu schaffen, bei dem bei sehr kompakter Bauweise der Ladegut-Manipulationsvorrichtung die Einlagerungs- und/oder Auslagerungsvorgänge im Hinblick auf die Durchsatzleistung optimiert werden können.

Die Aufgabe der Erfindung wird durch die Merkmale des Anspruches 1 gelöst. Von Vorteil ist, dass über die erste / zweite Ladegut-Manipulationsvorrichtung ausschließlich Ladegüter, wie Behälter, Tablare, Kartonage oder Artikeln zwischen einem Ladegut-Verteilsystem und einem Umsetzbereich am Regallager gefördert werden, nicht jedoch das Förderfahrzeug für die Einlagerung eines Ladegutes in das Regallager und Auslagerung eines Ladegutes aus dem Regallager. Die Umsetzvorrichtungen als auch die Tragrahmen können dadurch sehr kompakt gebaut werden. Die auszulagernden Ladegüter werden im Umsetzbereich vom Förderfahrzeug auf die jeweilige erste Umsetzvorrichtung übergeben, welche sodann unabhängig vom Förderfahrzeug und den Tragrahmen aus der Ausgangsstellung in die Umsetzstellung bewegt und dabei ein Ladegut in eine, in die Bewegungsbahn der Tragrahmen hineinbewegte Übergabeposition gefördert wird. Das Ladegut kann in der Übergabeposition von einem "unbelegten" Tragrahmen übernommen und von diesem abgefördert werden. Das Förderfahrzeug kann bereits unmittelbar nach der Übergabe eines Ladegutes auf die Umsetzvorrichtung wieder in das Regallager einfahren. Andererseits werden einzulagernde Ladegüter im Umsetzbereich von den Tragrahmen auf die jeweilige erste Umsetzvorrichtung übergeben, welche sodann aus ihrer Umsetzstellung in die Ausgangsstellung bewegt und dabei ein Ladegut in eine, aus der Bewegungsbahn der Tragrahmen herausbewegte Pufferposition gefördert wird. Danach wird das Ladegut im Umsetzbereich auf das Förderfahrzeug übernommen, welches sodann unabhängig von der ersten Umsetzvorrichtung und den Tragrahmen in das Regallager einfahren kann. Die erste Umsetzvorrichtung ermöglicht beim Einlagerungs- und/oder Auslagerungsvorgang eine Entkoppelung der Fahrbewegung des Förderfahrzeuges und der Förderbewegung eines Ladegutes zwischen einer Pufferposition und Übergabe/Übernahmeposition und damit eine erhebliche Verkürzung der Spielzeiten.

Von Vorteil ist, wenn die erste Ladegut-Manipulationsvorrichtung zur Einlagerung von Ladegütern und die zweite Ladegut-Manipulationsvorrichtung zur Auslagerung von Ladegütern eingesetzt werden. Das Förderfahrzeug kann wechselweise beide Ladegut-Manipulationsvorrichtungen bedienen. So ist es beispielsweise möglich, dass das Förderfahrzeug, welches bereits für einen Auslagerungsvorgang an der zweiten Ladegut-Manipulationsvorrichtung in den Umsetzbereich verfahren wurde, nach der Übergabe eines Ladegutes vom Förderfahrzeug an die erste Umsetzvorrichtung, sogleich für einen Einlagerungsvorgang an der ersten Ladegut-Manipulationsvorrichtung zur Verfügung steht und ein Ladegut unmittelbar von der ersten Umsetzvorrichtung auf das Förderfahrzeug übergeben werden kann.

Gemäß der Ausführung nach Anspruch 2 wird eine platzsparende Anordnung der ersten Umsetzvorrichtung und eine Verkürzung von Förderwegen zwischen dem Ladegut-Verteilsystem und dem Regallager erreicht und damit die Durchsatzleitung für eine Einlagerung/Auslagerung von Ladegütern gesteigert.

Eine vorteilhafte Weiterbildung der Erfindung ist in Anspruch 3 beschrieben. Durch die zusätzliche, stationäre und eine Vielzahl von Pufferplätzen aufweisende Puffervorrichtung können Ladegüter, welche in das Regallager noch eingelagert werden sollen oder aus dem Regallager ausgelagert wurden, temporär zwischengelagert werden. Diese Puffermöglichkeit erlaubt es nunmehr mit einer geringen Anzahl an Förderfahrzeugen auszukommen.

Sind die Puffervorrichtungen für Ladegüter durch die ersten Umsetzvorrichtungen gebildet, wie im Anspruch 4 beschrieben, können zusätzlich Puffervorrichtungen eingespart werden. Die Umsetzvorrichtungen übernehmen eine Doppelfunktion, die der Manipulation der Ladegüter und die der Pufferung der Ladegüter.

Die Fortbildung nach Anspruch 5 ermöglicht eine bauliche Vereinfachung der Ladegut-Manipulationsvorrichtung. Dabei können die Umsetzvorrichtungen zur Manipulation der Ladegüter jeweils wechselseitig in eine erste Umsetzstellung auf der ersten Umlaufbahnseite als auch in eine zweite Umsetzstellung auf der zweiten Umlaufbahnseite bewegt werden.

Wird auch zur Manipulation der Ladegüter zwischen den Tragrahmen und den Einlagerungs- oder Auslagerungsbahnen eine zweite Umsetzvorrichtung verwendet, wie in den Ansprüchen 6 und 8 beschrieben, die gemäß obigen Ausführung gestaltet ist, kann eine erhebliche Reduzierung der Manipulationszeiten für die Ladegüter erreicht werden.

Gemäß Anspruch 7 kann durch die Reihenfolge der Abgabe der Ladegüter auf den Tragrahmen eine Sortierreihenfolge hergestellt werden, in welcher die Ladegüter zu einem Warenausgangsbereich gefördert und beispielsweise auf einen Ladungsträger gestapelt werden.

Durch die Ausbildung nach Anspruch 9 wird eine ausreichend genaue Positionierung eines Ladegutes auf dem Tragrahmen, ersten Umsetzvorrichtung oder zweiten Umsetzvorrichtung und damit eine zuverlässige Übergabe eines Ladegutes zwischen einem Tragrahmen und einer Umsetzvorrichtung erreicht.

Werden die Manipulationsvorgänge von Ladegütern zwischen einem Tragrahmen und einer ersten bzw. zweiten Umsetzvorrichtung durch eine Überwachungsvorrichtung, wie im Anspruch 10 beschrieben, überwacht und/oder gesteuert, können störungsbedingte Stillstände der Ladegut-Manipulationsvorrichtung weitestgehend vermieden werden.

Die Ausgestaltungen nach den Ansprüchen 11 und 12 erlauben eine platzsparende Anordnung der ersten Ladegut-Manipulationsvorrichtung und/oder zweiten Ladegut-Manipulationsvorrichtung ohne Verbreiterung des Regallagers, da ohnehin üblicherweise Doppelregale verwendet werden, wobei dann die Ladegut-Manipulationsvorrichtungen um die Gassenbreite voneinander distanziert aufgestellt sind und zwischen ihnen in einen Umsetzbereich und in der jeweiligen Regalebene ein Förderfahrzeug (Shuttle) einfahren kann. Die Ladegut-Manipulationsvorrichtungen können außerdem durch voneinander getrennt (elektrisch) steuerbare Antriebe entkoppelt bzw. separat angesteuert werden. Dadurch können parallel Einlagerungs- und Auslagerungsvorgänge durchgeführt werden.

Gemäß der Ausführung nach Anspruch 13 sind die erste Ladegut-Manipulationsvorrichtung und zweite Ladegut-Manipulationsvorrichtung beidseits zur Regalgasse und spiegelbildlich zueinander angeordnet. Dadurch ist es nun möglich, dass ein in den Umsetzbereich eingefahrenes Förderfahrzeug zwischen den Ladegut-Manipulationsvorrichtungen positioniert wird und ohne Fahrbewegung in Richtung der Regalasse, vorerst an der zweiten Ladegut-Manipulationsvorrichtung ein Ladegut vom Förderfahrzeug an die erste Umsetzvorrichtung übergeben und danach an der ersten Ladegut-Manipulationsvorrichtung ein Ladegut von der ersten Umsetzvorrichtung auf das Förderfahrzeug übernommen wird. Auch ist es möglich, dass bei "Eilaufträgen" ein zu einem Auftrag erfasstes Ladegut über die Lastaufnahmevorrichtung von der ersten Umsetzvorrichtung der ersten Ladegut-Manipulationsvorrichtung über das Förderfahrzeug zu der ersten Umsetzvorrichtung der zweiten Ladegut-Manipulationsvorrichtung und danach unmittelbar von der Umlauffördervorrichtung und einer zweiten Umsetzvorrichtung zu einer Auslagerbahn gefördert wird. Die Lastaufnahmevorrichtung kann hierzu gegebenenfalls zwischen den Teleskoparmen mit einer Fördervorrichtung ausgestattet sein, welche die Beförderung des Ladegutes auf dem Förderfahrzeug begünstigt.

Sind die erste Ladegut-Manipulationsvorrichtung und zweite Ladegut-Manipulationsvorrichtung beidseits zur Regalgasse und in Richtung der Regalgasse vorzugsweise etwa um die Baulänge des Förderfahrzeuges axial zueinander versetzt angeordnet, wie im Anspruch 14 beschrieben, und in der Regalebene (entkoppelt bewegbare) zwei Förderfahrzeuge vorgesehen, kann mit dem ersten Förderfahrzeug die erste Ladegut-Manipulationsvorrichtung und mit dem zweiten Förderfahrzeug die zweite Ladegut-Manipulationsvorrichtung gleichzeitig bedient werden.

Eine vorteilhafte Ausgestaltung ist auch im Anspruch 15 beschrieben, da ein Ladegut ohne Manipulationsvorgang auf der Umlauffördervorrichtung über die Umsetzvorrichtungen und die Fördervorrichtung unmittelbar zwischen der Einlagerungsbahn und der Puffervorrichtung bzw. der Puffervorrichtung und der Auslagerungsbahn manipuliert werden kann.

Ist gemäß einem Kommissionierauftrag ein Ladegut erforderlich, werden die Umsetzvorrichtungen bei einem Einlagerungsvorgang zwischen die Einlagerungsbahn/Fördervorrichtung und die Fördervorrichtung/Puffervorrichtung bzw. bei einem Auslagerungsvorgang zwischen die Puffervorrichtung/Fördervorrichtung und Fördervorrichtung/Auslagerungsbahn bewegt, sodass ein Ladegut auf kürzestem Wege ein- bzw. ausgelagert werden kann. Diese Funktionalität kann insbesondere beim Auslagerungsvorgang, wie "Eilaufträgen" mit Vorteil eingesetzt werden. Es werden Transportstrecken für Ladegüter optimiert und wird auch die Umlauffördervorrichtung, das Förderfahrzeug sowie das Regallager entlastet. Ebenso kann die Anzahl der Umsetzungszyklen reduziert werden, was sich positiv auf den Wartungsaufwand und die Standzeit des Regallagersystems auswirkt.

Vorzugsweise wird die oben beschriebene Umlauffördervorrichtung kontinuierlich ohne Stillstand angetrieben, sodass höchste Durchsatzleistungen für den Einlagerungsvorgang und/oder Auslagerungsvorgang erreicht werden.

Zum besseren Verständnis der Erfindung wird diese anhand der nachfolgenden Figuren näher erläutert.

Es zeigen jeweils in stark schematisch vereinfachter Darstellung:
- Fig. 1: eine erste Ausführung eines Regallagersystems in perspektivischer Ansicht;
- Fig. 2: eine erste Ausführung einer Ladegut-Manipulationsvorrichtung zur Einlagerung von Ladegütern in perspektivischer Ansicht;
- Fig. 2a: das Regallagersystem nach Fig. 1 in Ansicht auf die Ladegut-Manipulationsvorrichtung zur Einlagerung von Ladegütern;
- Fig. 3: eine erste Ausführung einer Ladegut-Manipulationsvorrichtung zur Auslagerung von Ladegütern in perspektivischer Ansicht;
- Fig. 3a: das Regallagersystem nach Fig. 1 in Ansicht auf die Ladegut-Manipulationsvorrichtung zur Auslagerung von Ladegütern;
- Fig. 4a, 4b: das Regallagersystem nach Fig. 1 in Draufsicht auf die Ladegut-Manipulationsvorrichtungen und das Förderfahrzeug;
- Fig. 5: eine zweite Ausführung eines Regallagersystems in perspektivischer Ansicht;
- Fig. 6: eine zweite Ausführung einer Ladegut-Manipulationsvorrichtung zur Einlagerung von Ladegütern in perspektivischer Ansicht;
- Fig. 7: eine zweite Ausführung einer Ladegut-Manipulationsvorrichtung zur Auslagerung von Ladegütern in perspektivischer Ansicht;
- Fig. 8: das Regallagersystem nach Fig. 5 in Ansicht auf die Ladegut-Manipulationsvorrichtung zur Einlagerung von Ladegütern, gemäß den Linien VIII - VIII und entfernter Tribüne;
- Fig. 9: eine dritte Ausführung einer Ladegut-Manipulationsvorrichtung zur Einlagerung und/oder Auslagerung von Ladegütern in perspektivischer Ansicht;
- Fig. 10: eine vierte Ausführung einer Ladegut-Manipulationsvorrichtung bei einem Einlagerungsvorgang von Ladegütern in perspektivischer Ansicht;
- Fig. 11: die Ladegut-Manipulationsvorrichtung nach Fig. 10 bei einem Auslagerungsvorgang;
- Fig. 12: eine beispielhafte Ausführung eines selbstfahrenden, autonomen Förderfahrzeuges (Shuttles).

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

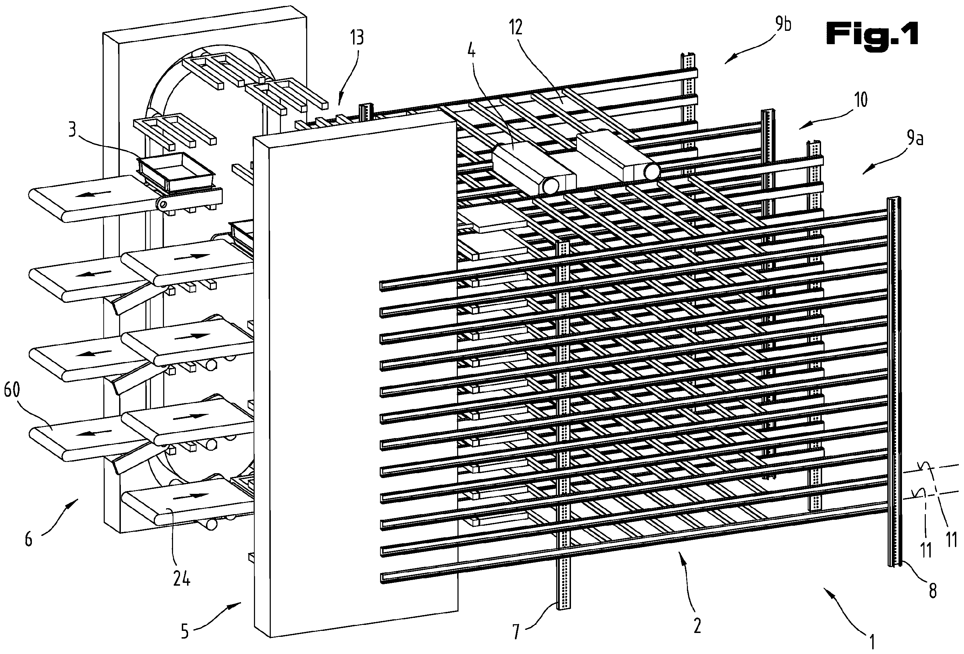

In den Fig. 1 bis 4 ist eine erste Ausführung eines Regallagersystems 1 gezeigt, welches ein Regallager 2 für Ladegüter 3, zumindest ein selbstfahrendes Förderfahrzeug 4, eine erste Ladegut-Manipulationsvorrichtung 5 und eine zweite Ladegut-Manipulationsvorrichtung 6 umfasst. Das Regallager 2 bildet voneinander abgewandte Regallagerseiten 7, 8 aus und weist in einem Abstand parallel angeordnete Lagerregale 9a, 9b auf, zwischen denen sich eine Regalgasse 10 erstreckt und welche in übereinander liegenden Regalebenen 11 jeweils nebeneinander vorgesehene Stellplätze 12 für die Ladegüter 3 ausbilden. Nach gezeigter Ausführung bilden die Lagerregale 9a, 9b in den Regalebenen 11 jeweils nebeneinander und hintereinander vorgesehene Stellplätze 12 für die Ladegüter 3 aus, sodass in Tiefenrichtung der Lagerregale 9a, 9b zwei Ladegüter 3 (nicht dargestellt) abgestellt werden können, daher eine so genannte "doppelttiefe" Lagerung möglich ist. Andererseits ist es auch möglich, dass die Lagerregale 9a, 9b in den Regalebenen 11 jeweils ausschließlich in einer Reihe nebeneinander vorgesehene Stellplätze 12 für die Ladegüter 3 ausbilden, sodass in Tiefenrichtung der Lagerregale 9a, 9b nur ein Ladegut 3 abgestellt werden kann, daher eine so genannte "einfachtiefe" Lagerung möglich ist.

In jeder Regalebene 11 erstreckt sich entlang der Regalgasse 10 und bis über die erste Regallagerseite 7 hinweg zu einem Umsetzbereich 13 eine Führungsbahn, entlang deren das Förderfahrzeug 4 (Shuttle) geführt bewegbar ist, um Ladegüter 3, wie beispielsweise Behälter, Kartonagen, Tablare und dgl. zu den in den Regalebenen 11 der Lagerregale 9a, 9b jeweils vorgesehenen Stellplätzen 12 anzutransportieren und von den in den Regalebenen 11 der Lagerregale 9a, 9b jeweils vorgesehenen Stellplätzen 12 abzutransportieren. Der Umsetzbereich 13 ist vor dem Regallager 2 zwischen den Ladegut-Manipulationsvorrichtungen 5, 6 ausgebildet.

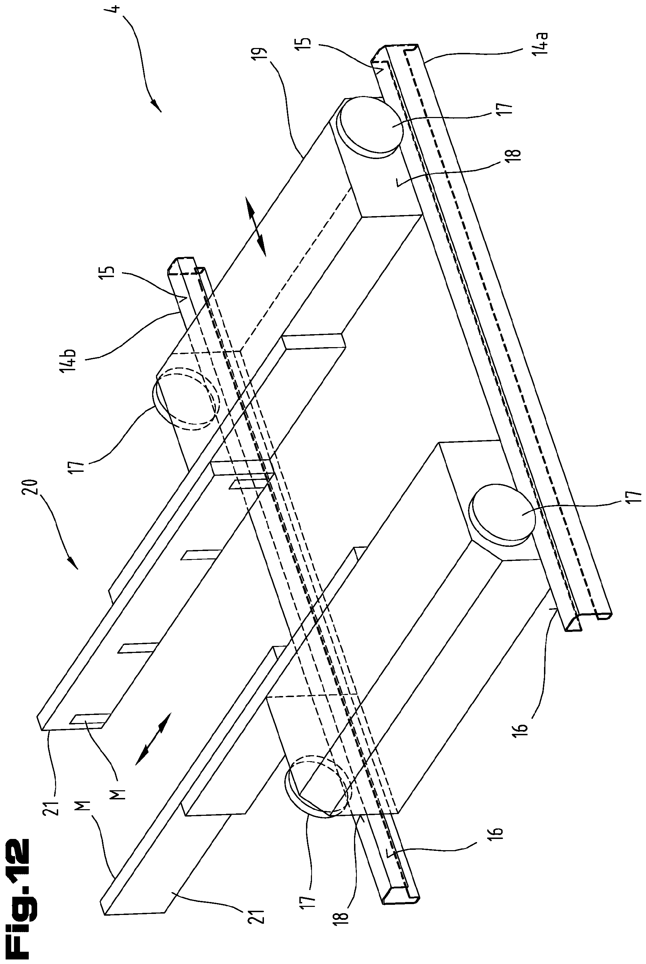

Die Führungsbahnen in den Regalebenen 11 sind jeweils durch an den Lagerregalen 9a, 9b befestigte horizontale Fahrschienen 14a, 14b mit je einer Höhenführungsbahn 15 und je einer Seitenführungsbahn 16 ausgebildet, wie in Fig. 12 näher beschrieben.

Die Fahrschienen 14a, 14b sind beispielsweise U-Profile, C-Profile und dgl. Das Förderfahrzeug 4, wie es in Fig. 12 näher dargestellt ist, weist Antriebsräder 17 auf und kann entlang der Höhenführungsbahnen 15 rollend bewegt werden. Zur Seitenführung des Förderfahrzeuges 4, ist dieses mit Seitenführungsorganen 18 versehen. Beispielsweise sind die Seitenführungsorgane 18 durch am Gehäuserahmen 19 des Förderfahrzeuges 4 ausgebildete parallele Führungsanschlagflächen gebildet, welche zwischen den Seitenführungsbahnen 16 der Fahrschienen 14a, 14b positionierbar sind. Das Förderfahrzeug 4 ist ferner mit einer Lastaufnahmevorrichtung 20 zur Einlagerung/Auslagerung/Umlagerung von einem oder gleichzeitig zwei Ladegütern 3 ausgestattet, welche nach gezeigter Ausführung durch Teleskoparme 21 und jeweils an diesen angeordnete Mitnehmer "M" umfasst. Eine solche Lastaufnahmevorrichtung 20 ist beispielsweise aus der US 2005/0095095 A1 oder EP 0 647 575 A1 bekannt, und kann aufgrund der kompakten Bauweise der Teleskoparme 21 und der zuverlässigen Funktionsweise mit Vorteil eingesetzt werden.

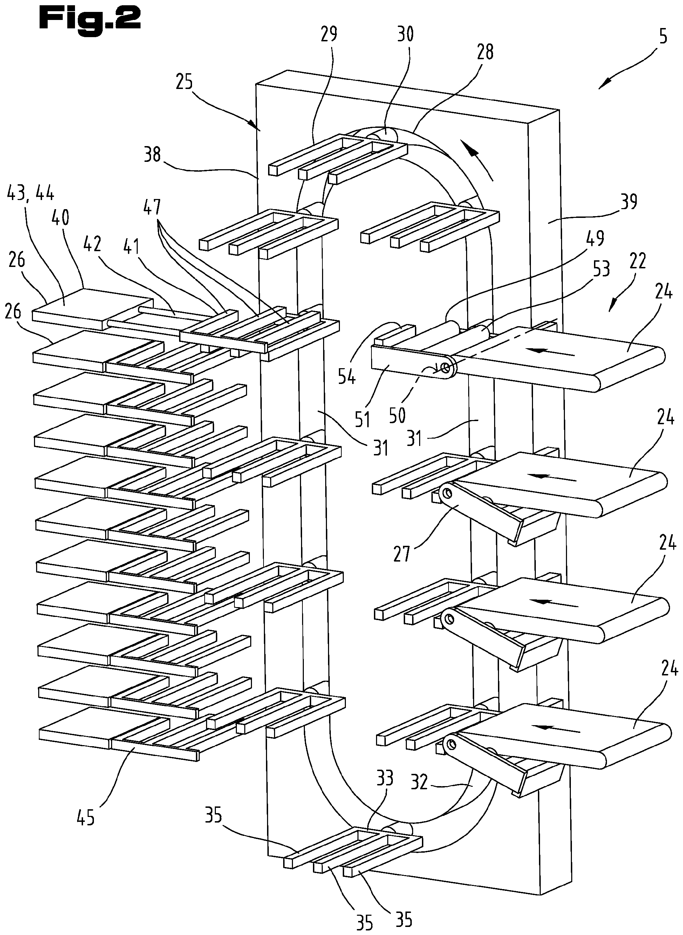

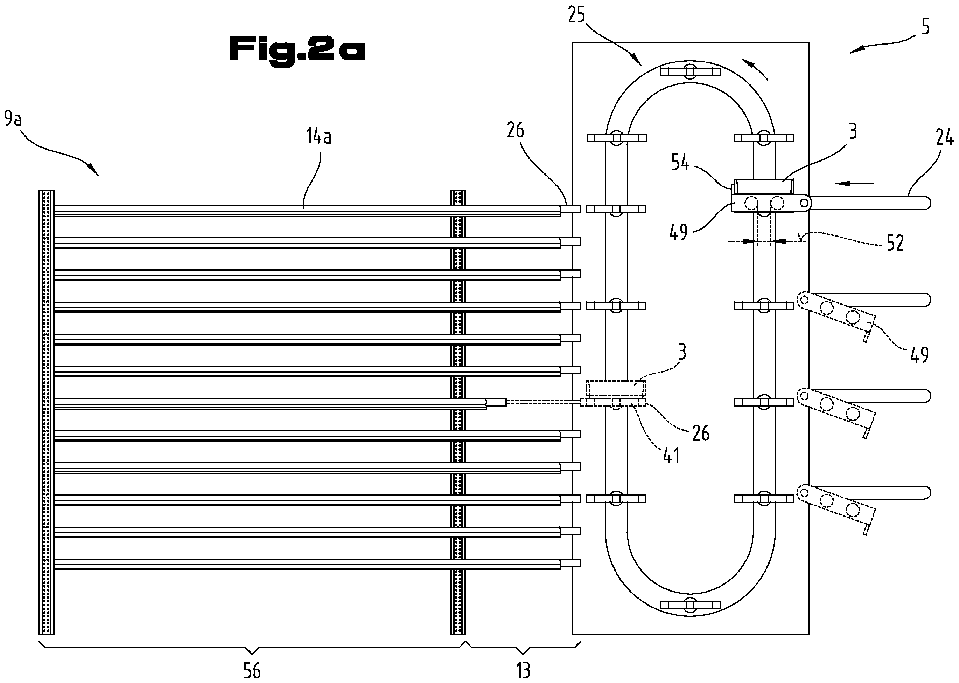

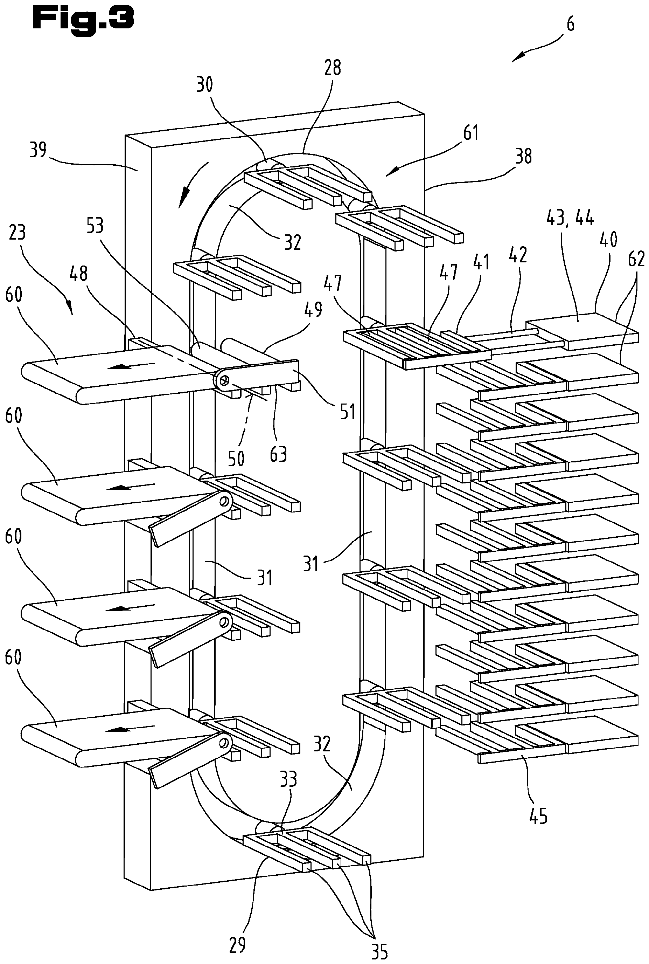

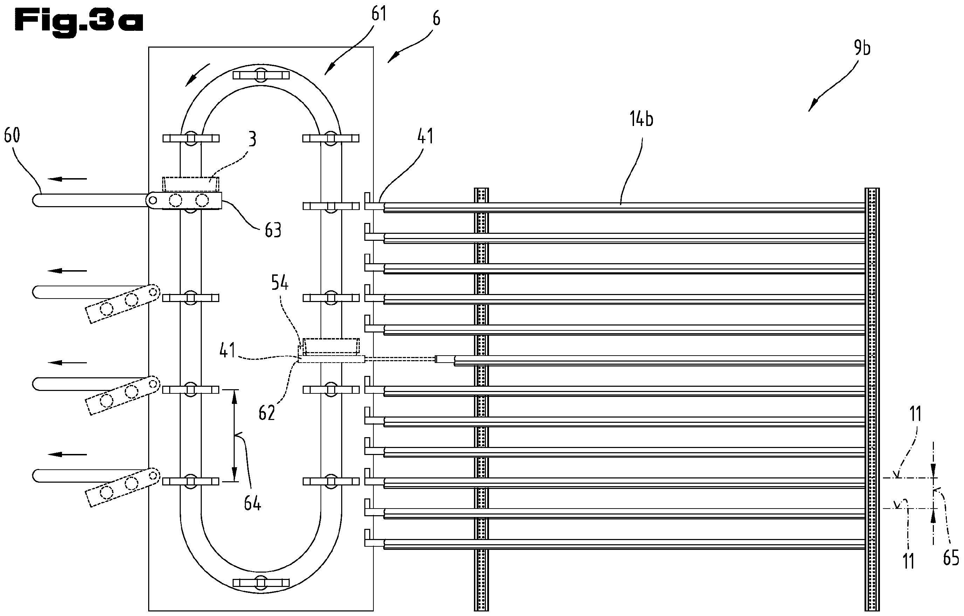

Wie in Fig. 2 und 3 ersichtlich, sind nach einer bevorzugten Ausführungsvariante zwischen einem (abschnittsweise dargestellten) Ladegut-Verteilsystem und dem Regallager 2 einerseits die erste Ladegut-Manipulationsvorrichtung 5 und andererseits die zweite Ladegut-Manipulationsvorrichtung 6 angeordnet. Das Ladegut-Verteilsystem umfasst vorzugsweise ein separates Einlagerungs-Verteilsystem 22, durch welches Ladegüter 3 zum Regallagersystem 1 angefördert werden, und ein separates Auslagerungs-Verteilsystem 23, durch welches für einen Auftrag, insbesondere einen Kommissionierauftrag oder Kundenauftrag benötigte Ladegüter 3 vom Regallagersystem 1 abgefördert werden. Die erste Ladegut-Manipulationsvorrichtung 5 ist an das Einlagerungs-Verteilsystem 22 für Ladegüter 3 und die zweite Ladegut-Manipulationsvorrichtung 6 an das Auslagerungs-Verteilsystem 23 für Ladegüter 3 angeschlossen.

Wie in Fig. 2 näher dargestellt, umfasst das Einlagerungs-Verteilsystem 22 vertikal übereinander angeordnete Einlagerungsbahnen 24, welche beispielsweise als Bandförderer, Rollenförderer, bevorzugt mit Staufunktion ausgebildet sind. Die Einlagerungsbahnen 24 sind dabei stationär angeordnet.

Die Ladegut-Manipulationsvorrichtung 5 weist gemäß einer ersten Ausführung eine vertikal ausgerichtete Umlauffördervorrichtung 25, erste Umsetzvorrichtungen 26 und zweite Umsetzvorrichtungen 27 auf.

Die Umlauffördervorrichtung 25 (Einlagerungs-Umlauffördervorrichtung) ist durch einen Paternoster gebildet und umfasst in Umlaufrichtung - gemäß Pfeil - mit (festem) gegenseitigem Abstand angeordnete und durch einen (nicht gezeigten) Stellantrieb, insbesondere Zugmitteltrieb, entlang einer geschlossenen Förderumlaufbahn 28 bewegbare Tragrahmen 29 für Ladegüter 3. Die Tragrahmen 29 sind dabei jeweils über eine Gelenkverbindung 30 an einem nicht gezeigten Zugmittel, wie beispielsweise eine Kette, ein Riemen und dgl. befestigt, sodass die Tragrahmen 29 während ihrer Umlaufbewegung entlang der Förderumlaufbahn 28 stets in einer Horizontallage gehalten werden, wie in Fig. 2 ersichtlich. Die Gelenkverbindung 30 ist entlang der Förderumlaufbahn 28 geführt, sodass auch eine exakte Führung der Tragrahmen 29 erreicht wird. Die Förderumlaufbahn 28 ist durch parallel zueinander verlaufende geradlinige Umlaufbahnabschnitte 31 und diese geradlinigen Umlaufbahnabschnitte 31 endseitig verbindende, halbkreisförmige Umlaufbahnabschnitte 32 gebildet.

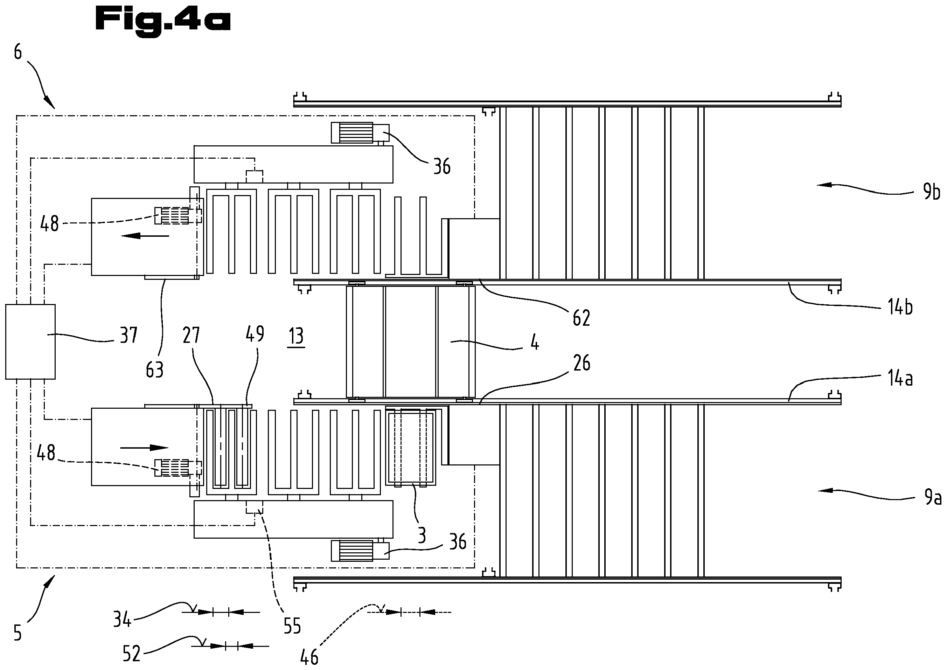

Die rostartigen Tragrahmen 29 sind jeweils durch einen an der Gelenkverbindung 30 befestigten Basisteil 33 und an diesem mit gegenseitigem Abstand 34 vorragende Aufnahmeteile 35 gebildet. Der Abstand 34 (Fig. 4a) zwischen benachbarten Aufnahmeteilen 35 ist dabei so bemessen, dass zwischen den Aufnahmeteilen 35 Freiräume entstehen, durch welche noch näher zu beschreibende Aufnahmeteile der Umsetzvorrichtungen 26, 27 hindurchgeführt werden können, wenn die Tragrahmen 29 relativ zu den Umsetzvorrichtungen 26, 27 in Umlaufrichtung bewegt werden.

Die Aufnahmeteile 35 der Tragrahmen 29 sind vorzugsweise am Basisteil 33 starr befestigte Tragarme, welche auf ihrer Oberseite relativ zur Umlaufrichtung eine horizontale Auflagerebene für zumindest ein Ladegut 3 ausbilden.

Der Antrieb der Umlauffördervorrichtung 25 bzw. die Umlaufbewegung der Tragrahmen 29 wird durch einen elektrischen Antrieb 36, wie in Fig. 4a schematisch dargestellt, erreicht, welcher mit dem Stellantrieb gekoppelt und an eine elektronische Steuervorrichtung 37 angeschlossen ist.

Wie aus Fig. 2 ersichtlich, sind die ersten Umsetzvorrichtungen 26 entlang des ersten geraden Umlaufbahnabschnittes 31 auf einer ersten Umlaufbahnseite 38 und die zweiten Umsetzvorrichtungen 27 entlang des zweiten geraden Umlaufbahnabschnittes 31 auf einer zweiten Umlaufbahnseite 39 angeordnet.

Die der ersten Umlaufbahnseite 38 zugeordneten, ersten Umsetzvorrichtungen 26 umfassen in der jeweiligen Regalebene 11 (Fig. 1) angeordnete und über einen Stellantrieb 40 zwischen einer aus der Förderumlaufbahn 28 herausbewegten Ausgangsstellung (wie in Fig. 2a in festen Linien eingetragen) und einer in die Förderumlaufbahn 28 hineinbewegten Umsetzstellung (wie in Fig. 2a in strichlierte Linien eingetragen) bewegbare Aufnahmerahmen 41, auf denen jeweils zumindest ein Ladegut 3 abstellbar ist. Die ersten Umsetzvorrichtungen 26 sind dabei, wie Fig. 4a erkennen lässt, seitlich neben der Regalgasse 10 entlang der Führungsbahnen 14a für das Förderfahrzeug 4 angeordnet. Nach gezeigter Ausführung sind die Aufnahmerahmen 41 in der jeweiligen Horizontalebene durch Teleskopstangen 42 verstellbar an einer Lagervorrichtung 43 gelagert.

Der Stellantrieb 40 umfasst demnach die Teleskopstangen 42 und die Lagervorrichtung 43. Bevorzugt ist die jeweilige erste Umsetzvorrichtung 26 über die Lagervorrichtung 43 am Lagerregal 9a befestigt, beispielsweise angeschraubt, wie dies jedoch nicht näher dargestellt ist. Die Lagervorrichtungen 43 können eine Puffervorrichtung bilden, wobei die jeweilige Lagervorrichtung 43 an ihrer Oberseite einen Pufferplatz 44 für zumindest ein Ladegut 3 ausbildet. Demnach kann die Ladegut-Manipulationsvorrichtung 5 zusätzlich eine Puffervorrichtung umfassen, die jeweils den Regalebenen 11 der Lagerregale 9a, 9b vorgelagert Pufferplätze 44 ausbildet, auf welchen jeweils zumindest ein Ladegut 3 abstellbar ist.

Die rostartigen Aufnahmerahmen 41 umfassen jeweils einen mit dem Stellantrieb 40, insbesondere den Teleskopstangen 42, gekoppelten Basisteil 45 und an diesem mit gegenseitigem Abstand 46 vorragende Aufnahmeteile 47. Der Abstand 46 zwischen benachbarten Aufnahmeteilen 47 ist dabei so bemessen, dass zwischen den Aufnahmeteilen 47 Freiräume entstehen. Somit wird sichergestellt, dass in der Umsetzstellung eines der Aufnahmerahmen 41 die Tragrahmen 29 auf deren Umlaufbewegung mit den Aufnahmeteilen 35 zwischen die Aufnahmeteile 47 des Aufnahmerahmens 41 durch die Freiräume hindurch bewegt werden. Eine Kollision zwischen Tragrahmen 29 und Aufnahmerahmen 41 kann bei üblichen Führungstoleranzen ausgeschlossen werden.

Die Aufnahmeteile 47 der Aufnahmerahmen 41 sind vorzugsweise am Basisteil 45 starr befestigte Tragarme, welche auf ihrer Oberseite relativ zur Umlaufrichtung der Tragrahmen 29 eine horizontale Auflagerebene für zumindest ein Ladegut 3 ausbilden.

Die der zweiten Umlaufbahnseite 39 zugeordneten, zweiten Umsetzvorrichtungen 27 sind in vertikal übereinander liegenden Horizontalebenen angeordnet und umfassen jeweils ein über einen Stellantrieb 48 zwischen einer aus der Förderumlaufbahn 28 herausbewegten Ausgangsstellung (wie in Fig. 2a in strichlierte Linien eingetragen) und einer in die Förderumlaufbahn 28 hineinbewegten Umsetzstellung (wie in Fig. 2a in festen Linien eingetragen) bewegbare Fördervorrichtung 49. Bevorzugt sind auch die zweiten Umsetzvorrichtungen 27 seitlich neben der Regalgasse 10 entlang der Führungsbahnen 14a für das Förderfahrzeug 4 angeordnet.

Die Fördervorrichtung 49, beispielsweise ein Rollenförderer, ist nach diesem Ausführungsbeispiel um eine horizontale Lagerachse 50 schwenkbar an der Einlagerungsbahn 24 gelagert. Die Fördervorrichtung 49 ist vorzugsweise an einen Förderantrieb (nicht dargestellt) gekoppelt, wobei zumindest eine Förderrolle angetrieben ist. Dadurch kann die Positionierung eines Ladegutes 3 relativ zur Fördervorrichtung 49 verbessert werden.

Auch die zweiten Umsetzvorrichtungen 27 bzw. die Fördervorrichtungen 49 umfassen jeweils einen Basisteil 51 und an diesem mit gegenseitigem Abstand 52 (Fig. 2a) vorragende Aufnahmeteile 53. Der Abstand 52 zwischen benachbarten Aufnahmeteilen 53 ist dabei so bemessen, dass zwischen den Aufnahmeteilen 53 Freiräume entstehen. Somit wird sichergestellt, dass in der Umsetzstellung einer der Fördervorrichtungen 49 die Tragrahmen 29 auf deren Umlaufbewegung mit den Aufnahmeteilen 35 zwischen die Aufnahmeteile 53 durch die Freiräume hindurch bewegt werden. Eine Kollision zwischen Tragrahmen 29 und Fördervorrichtungen 49 kann bei üblichen Führungstoleranzen ausgeschlossen werden.

Die Aufnahmeteile 53 der Fördervorrichtungen 49 sind vorzugsweise am Basisteil 51 gelagerte, gegebenenfalls angetriebene Förderrollen, welche auf ihrer Oberseite relativ zur Umlaufrichtung der Tragrahmen 29 eine horizontale Auflagerebene für zumindest ein Ladegut 3 ausbilden.

Die zweiten Umsetzvorrichtungen 27 können außerdem jeweils eine in den Bewegungsweg der Ladegüter 3 auf der Fördervorrichtung 49 hineinragende Ladegut-Haltevorrichtung 54 zur Positionierung und/oder Sicherung eines Ladegutes 3 auf der Fördervorrichtung 49 umfassen.

Darüber hinaus ist es von Vorteil, wenn die Ladegut-Manipulationsvorrichtung 5 mit einer Überwachungsvorrichtung 55, beispielsweise Sensoren oder ein Kamerasystem, zum Erfassen eines Belegungszustandes auf einem Tragrahmen 29 versehen ist.

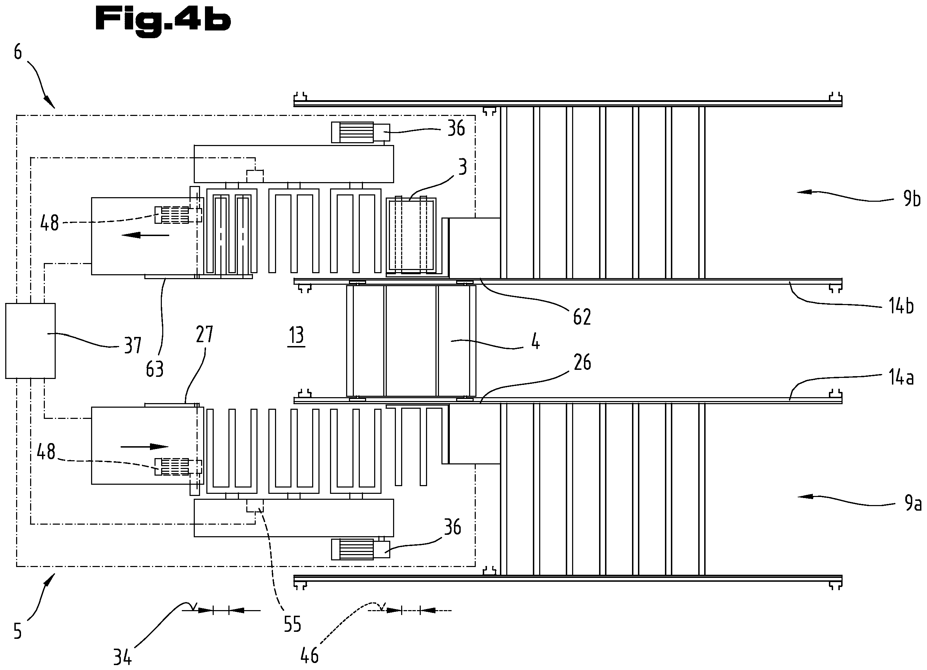

Die Überwachungsvorrichtung 55, die Förderantriebe der Einlagerungsbahnen 24, der Antrieb 36, die Stellantriebe 40, 48 und die Förderantriebe der Fördervorrichtungen 49 sind an die elektronische Steuerungsvorrichtung 37 (Fig. 4a, 4b) angeschlossen, welche sämtliche Förderabläufe der Ladegüter 3 zwischen den Einlagerungsbahnen 24 und den ersten Umsetzvorrichtungen 26 bzw. zweiten Umsetzvorrichtungen 26 und Pufferplätzen 44 koordiniert.

Anhand den Fig. 2a und Fig. 4a wird ein Einlagerungsvorgang für Ladegüter 3 beschrieben. Dabei wird ein Ladegut 3 auf einer der Einlagerungsbahnen 24 zu einer der, an diese entsprechende Einlagerungsbahn 24 anschließenden zweiten Umsetzvorrichtung 27 angefördert. Dort angekommen, wird das Ladegut 3 auf die durch den Stellantrieb 48 bereits in die Umsetzstellung (wie in festen Linien eingetragen) bewegte Fördervorrichtung 49 übergeben. In der Umsetzstellung verlaufen eine Übernahmeebene der Umsetzvorrichtung 27 und eine Förderebene der Einlagerungsbahn 24 in einer, bevorzugt horizontalen Ebene. Dabei kann das Ladegut 3 auf der Fördervorrichtung 49 durch die in den Bewegungsweg hineinragende Ladegut-Haltevorrichtung 54 in eine Übergabeposition positioniert werden. Nach einer anderen Ausführung ist es auch möglich, dass die Ladegut-Haltevorrichtung durch den Förderantrieb für die Fördervorrichtung 49 gebildet ist und alleinig durch Regelung des Förderantriebes das Ladegut 3 in die Übergabeposition positioniert wird. Hierzu kann man sich einer Sensorik, beispielsweise einer Lichtschranke, bedienen, die ihrerseits mit der Steuerung 37 verbunden ist und welche eine Positionsüberwachung des Ladegutes 3 relativ zur Fördervorrichtung 49 ermöglicht.

Wird nun ein "unbelegter" Tragrahmen 29 in Umlaufrichtung - gemäß Pfeil - relativ zur, in die Umsetzstellung bewegte Umsetzvorrichtung 27 angetrieben, werden die Aufnahmeteile 35 der(s) Tragrahmen(s) 29 durch die Freiräume zwischen den Aufnahmeteilen 53 nach oben hindurchbewegt und dabei das Ladegut 3, welches in der Übergabeposition positioniert ist, durch Anheben auf den Tragrahmen 29 übernommen. Sodann wird das Ladegut 3 auf dem Tragrahmen 29 aufliegend in Umlaufrichtung von der zweiten Umlaufbahnseite 39 auf die erste Umlaufbahnseite 38 gefördert und in einer durch die Steuerung 37 festgelegten Regalebene 11 an eine der ersten Umsetzvorrichtungen 26 bzw. einen Aufnahmerahmen 41 übergeben, welche(r) zuvor durch den Stellantrieb 40 in die Umsetzstellung (wie in strichlierte Linien eingetragen) bewegt wurde.

Dabei werden die Aufnahmeteile 35 der(s) Tragrahmen(s) 29 durch die Freiräume zwischen den Aufnahmeteilen 47 nach unten hindurchbewegt und das Ladegut 3, welches auf der Tragrahmen 29 in einer Aufnahmestellung positioniert ist, durch Absenken in Richtung auf den Tragrahmen 29 auf den Aufnahmerahmen 41 übergeben. Das Ladegut 3 befindet sich in einer Übernahmeposition auf dem Aufnahmerahmen 41, wie in strichlierte Linien eingetragen.

Danach wird das Ladegut 3 von der ersten Umsetzvorrichtung 26 bzw. dem Aufnahmerahmen 41 in eine Pufferposition der betreffenden Regalebene 11 im Umsetzbereich 13 bewegt. Hierzu wird die Umsetzvorrichtung 26 bzw. der Aufnahmerahmen 41 durch den Stellantrieb 40 aus der Umsetzstellung in die Ausgangsstellung bewegt, wie in Fig. 4a ersichtlich.

Das Förderfahrzeug 4 wird in der betreffenden Regalebene 11 aus dem Lagerbereich 56 im Regallager 2 in den Umsetzbereich 13 bis zur Pufferposition verfahren, in welcher das Ladegut 3 durch die Lastaufnahmevorrichtung 20 auf das Förderfahrzeug 4 übernommen werden kann. Danach wird das Ladegut 3 vom Förderfahrzeug 4 zu einem freien Stellplatz 12 im Regallager 2 gefördert und mittels der Lastaufnahmevorrichtung 20 am freien Stellplatz 12 abgestellt. Das Einlagern der Ladegüter 3 in das Lagerregal 9a, 9b erfolgt nach dem chaotischen Lagerungsprinzip.

In Fig. 3 ist die Ladegut-Manipulationsvorrichtung 6 näher dargestellt, welche zur Auslagerung von Ladegütern 3 gemäß einem Auftrag dient. Die Ladegut-Manipulationsvorrichtung 6 ist an das Auslagerungs-Verteilsystem 23 angeschlossen, welches vertikal übereinander angeordnete Auslagerungsbahnen 60 auf, welche beispielsweise als Bandförderer, Rollenförderer, bevorzugt mit Staufunktion ausgebildet sind. Die Auslagerungsbahnen 60 sind dabei stationär angeordnet.

Die Ladegut-Manipulationsvorrichtung 6 weist gemäß einer ersten Ausführung eine vertikal ausgerichtete Umlauffördervorrichtung 61, erste Umsetzvorrichtungen 62 und zweite Umsetzvorrichtungen 63 auf. Die Umlauffördervorrichtung 61 (Auslagerungs-Umlauffördervorrichtung) ist ebenfalls durch einen Paternoster gebildet.

Die Umlauffördervorrichtung 61 entspricht jener Ausführung, wie sie bereits gemäß der Umlauffördervorrichtung 25 beschrieben wurde und wird, um Wiederholungen zu vermeiden, auf obige Ausführungen Bezug genommen, wobei für gleiche Teile gleiche Bezugszeichen bzw. Bauteilbezeichnungen verwendet werden. Entsprechendes gilt für die Umsetzvorrichtungen 62, 63, welche den Umsetzvorrichtungen 26, 27 entsprechen und wird auf die obige Ausführungen Bezug genommen.

Wie aus Fig. 3 ersichtlich, sind die ersten Umsetzvorrichtungen 62 entlang des ersten geraden Umlaufbahnabschnittes 31 auf einer ersten Umlaufbahnseite 38 und die zweiten Umsetzvorrichtungen 63 entlang des zweiten geraden Umlaufbahnabschnittes 31 auf einer zweiten Umlaufbahnseite 39 angeordnet.

Der Antrieb der Umlauffördervorrichtung 61 bzw. die Umlaufbewegung der Tragrahmen 29 wird durch einen elektrischen Antrieb 36, wie in Fig. 4a schematisch dargestellt, erreicht, welcher mit dem Stellantrieb gekoppelt und ebenfalls an die elektronische Steuervorrichtung 37 angeschlossen ist.

Die zweiten Umsetzvorrichtungen 63 können außerdem jeweils eine nicht näher dargestellte Ladegut-Haltevorrichtung aufweisen, welche durch den Förderantrieb für die Fördervorrichtung 49 gebildet ist und alleinig durch Regelung des Förderantriebes das Ladegut 3 in die Übergabeposition positioniert wird. Hierzu kann man sich einer Sensorik, beispielsweise einer Lichtschranke, bedienen, die ihrerseits mit der Steuerung 37 verbunden ist und welche eine Positionsüberwachung des Ladegutes 3 relativ zur Fördervorrichtung 49 ermöglicht.

Darüber hinaus ist es von Vorteil, wenn auch die Ladegut-Manipulationsvorrichtung 6 mit einer Überwachungsvorrichtung 55, beispielsweise Sensoren oder ein Kamerasystem, zum Erfassen eines Belegungszustandes auf einer Tragrahmen 29 versehen ist.

Die Überwachungsvorrichtung 55, die Förderantriebe der Auslagerungsbahnen 60, der Antrieb 36, die Stellantriebe 40, 48 und die Förderantriebe der Fördervorrichtungen 49 sind an die elektronische Steuerungsvorrichtung 37 (Fig. 4a, 4b) angeschlossen, welche sämtliche Förderabläufe der Ladegüter 3 zwischen den ersten Umsetzvorrichtungen 62 und den Auslagerungsbahnen 60 koordiniert.

Anhand der Fig. 3a und Fig. 4b wird ein Auslagerungsvorgang für Ladegüter 3 beschrieben. Wird ein Auftrag elektronisch erfasst, so wird zumindest ein Ladegut 3 vom Förderfahrzeug 4 aus dem Regallager 2 ausgelagert. Dabei werden vorerst ein oder mehrere Ladegüter 3 mittels der Lastaufnahmevorrichtung 20 von einem Lagerregal 9a, 9b auf das Förderfahrzeug 4 übernommen und dieses mit dem oder den Ladegütern 3 entlang der Fahrschienen 14a, 14b in einer der Regalebenen 11 in den Umsetzbereich 13 verfahren. Dort angekommen, können in dieser Regalebene 11 mittels der Lastaufnahmevorrichtung 20 ein oder mehrere Ladegüter 3 vom Förderfahrzeug 4 unmittelbar auf den, in die Ausgangsstellung bewegten Aufnahmerahmen 41 (Fig. 4b) oder auf den freien Pufferplatz 44 übergeben werden. Das Ladegut 3 befindet sich in einer Pufferposition auf dem Aufnahmerahmen 41, wie in festen Linien in Fig. 4b eingetragen.

Soll nun das Ladegut 3 an einen "unbelegten" Tragrahmen 29 übergeben werden, wird der Aufnahmerahmen 41 durch den Stellantrieb 40 aus seiner Ausgangsstellung (wie in Fig. 3a in festen Linien eingetragen) in die Umsetzstellung (wie in Fig. 3a in strichlierte Linien eingetragen) und dabei das am Aufnahmerahmen 41 aufliegende Ladegut 3 aus der Pufferposition in die Übergabeposition bewegt, wie in strichlierte Linien in Fig. 3a eingetragen. Dabei kann das Ladegut 3 auf dem Aufnahmerahmen 41 durch eine ausschließlich in Fig. 3a dargestellte und in den Bewegungsweg hineinragende Ladegut-Haltevorrichtung 54 in die Übergabeposition positioniert werden.

Wird nun ein "unbelegter" Tragrahmen 29 in Umlaufrichtung - gemäß Pfeil - relativ zur, in die Umsetzstellung bewegte Umsetzvorrichtung 62 angetrieben, werden die Aufnahmeteile 35 der(s) Tragrahmen(s) 29 durch die Freiräume zwischen den Aufnahmeteilen 47 nach oben hindurchbewegt und dabei das Ladegut 3, welches in der Übergabeposition positioniert ist, durch Anheben auf den Tragrahmen 29 übernommen. Sodann wird das Ladegut 3 auf dem Tragrahmen 29 aufliegend in Umlaufrichtung von der ersten Umlaufbahnseite 38 auf die zweite Umlaufbahnseite 39 gefördert und in einer durch die Steuerung 37 festgelegten Auslagerebene an eine der zweiten Umsetzvorrichtungen 63 bzw. eine Fördervorrichtung 49 übergeben, welche zuvor durch den Stellantrieb 48 in die Umsetzstellung (wie in festen Linien eingetragen) bewegt wurde.

Dabei werden die Aufnahmeteile 35 der(s) Tragrahmen(s) 29 durch die Freiräume zwischen den Aufnahmeteilen 53 nach unten hindurchbewegt und das Ladegut 3, welches auf der Tragrahmen 29 in einer Aufnahmestellung positioniert ist, durch Absenken in Richtung auf den Tragrahmen 29 auf die Fördervorrichtung 49 übergeben. Das Ladegut 3 befindet sich in einer Übernahmeposition auf der Fördervorrichtung 49, wie in strichlierte Linien eingetragen.

Danach wird das Ladegut 3 von der zweiten Umsetzvorrichtung 63 bzw. Fördervorrichtung 49 auf die Auslagerbahn 60 gefördert.

Die Ladegut-Manipulationsvorrichtungen 5, 6 sind bevorzugt zur Regalgasse 10 spiegelbildlich einander gegenüberliegend aufgestellt, wie in Fig. 1 ersichtlich. Andererseits ist es auch möglich, dass die Ladegut-Manipulationsvorrichtungen 5, 6 einander gegenüberliegend aufgestellt, aber in Richtung der Regalgasse 10 axial zueinander versetzt sind.

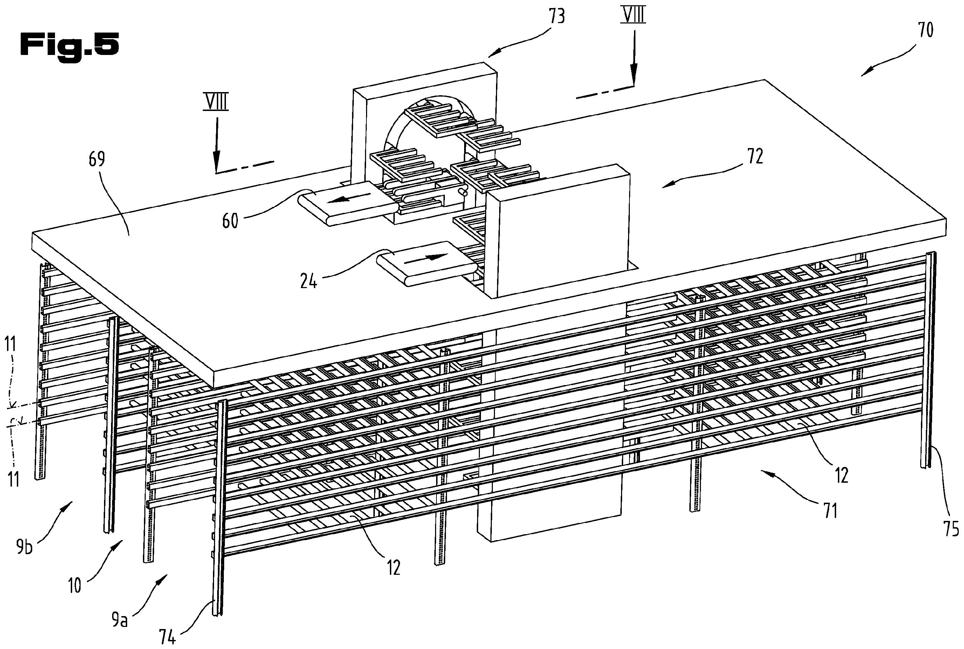

In den Fig. 5 bis 8 ist eine zweite Ausführung eines Regallagersystems 70 gezeigt, welches ein Regallager 71 für Ladegüter 3, zumindest ein selbstfahrendes Förderfahrzeug 4 (nicht ersichtlich), eine erste Ladegut-Manipulationsvorrichtung 72 und eine zweite Ladegut-Manipulationsvorrichtung 73 umfasst. Eine Tribüne 69 trennt unterschiedliche Stockwerksebenen, wobei die Ladegut-Manipulationsvorrichtungen 72, 73 aus Ausnehmungen am oberen Stockwerk herausragen. Das Regallager 2 bildet voneinander abgewandte Regallagerseiten 74, 75 aus und weist in einem Abstand parallel angeordnete Lagerregale 9a, 9b auf, zwischen denen sich eine Regalgasse 10 erstreckt und welche in übereinander liegenden Regalebenen 11 jeweils nebeneinander vorgesehene Stellplätze 12 für die Ladegüter 3 ausbilden. Nach gezeigter Ausführung bilden die Lagerregale 9a, 9b in den Regalebenen 11 jeweils nebeneinander und hintereinander vorgesehene Stellplätze 12 für die Ladegüter 3 aus, sodass in Tiefenrichtung der Lagerregale 9a, 9b zwei Ladegüter 3 (nicht dargestellt) abgestellt werden können, daher eine so genannte "doppelttiefe" Lagerung möglich ist.

Die Ladegut-Manipulationsvorrichtungen 72, 73 sind zwischen den stirnseitigen Regallagerseiten 74, 75 angeordnet, daher im Regallager 71 bzw. in den Lagerregalen 9a, 9b integriert. Der Umsetzbereich 13 ist zwischen den Ladegut-Manipulationsvorrichtungen 72, 73 ausgebildet, wobei in diesem Ladegüter 3 von einem Ladegut-Verteilsystem, insbesondere einem Einlagerungs-Verteilsystem 22 angefördert und einem Auslagerung-Verteilsystem 23 abgefördert, zwischen dem Ladegut-Verteilsystem und den Ladegut-Manipulationsvorrichtungen 72, 73 umgesetzt sowie zwischen den Ladegut-Manipulationsvorrichtungen 72, 73 und dem Regallager 2 gefördert werden.

In jeder Regalebene 11 erstreckt sich entlang der Regalgasse 10 zwischen den stirnseitigen Regallagerseiten 74, 75, daher auch durch den Umsetzbereich 13 hindurch eine Führungsbahn, entlang deren das Förderfahrzeug 4 (Shuttle) geführt bewegbar ist, um Ladegüter 3, wie beispielsweise Behälter, Kartonagen, Tablare und dgl. zu den in den Regalebenen 11 der Lagerregale 9a, 9b jeweils vorgesehenen Stellplätzen 12 anzutransportieren und von den in den Regalebenen 11 der Lagerregale 9a, 9b jeweils vorgesehenen Stellplätzen 12 abzutransportieren.

Die Führungsbahnen in den Regalebenen 11 sind jeweils durch an den Lagerregalen 9a, 9b befestigte horizontale Fahrschienen 14a, 14b mit je einer Höhenführungsbahn 15 und je einer Seitenführungsbahn 16 ausgebildet, wie oben beschrieben und in Fig. 12 gezeigt.

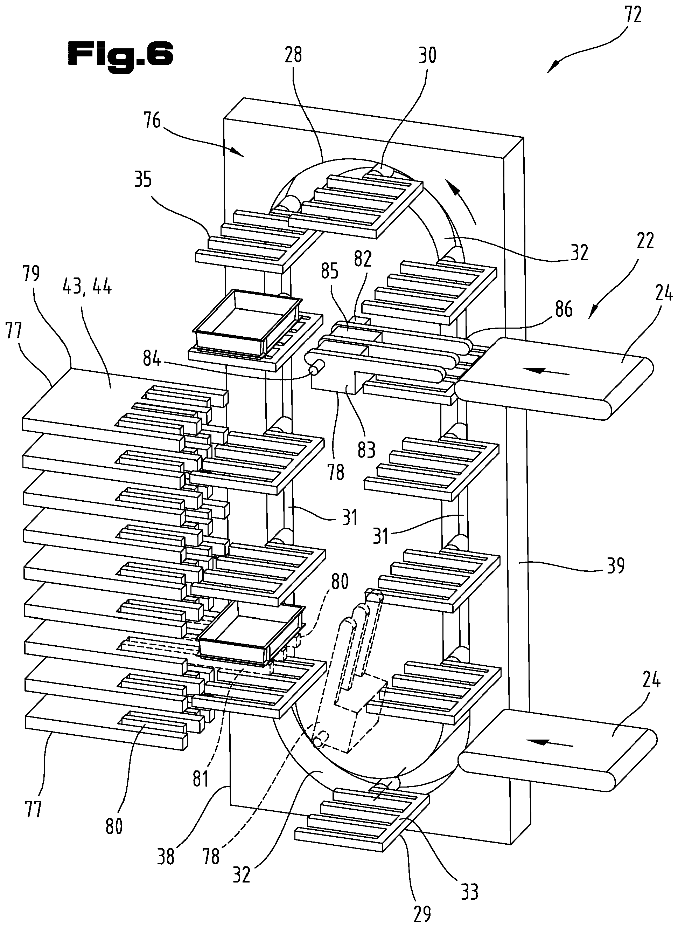

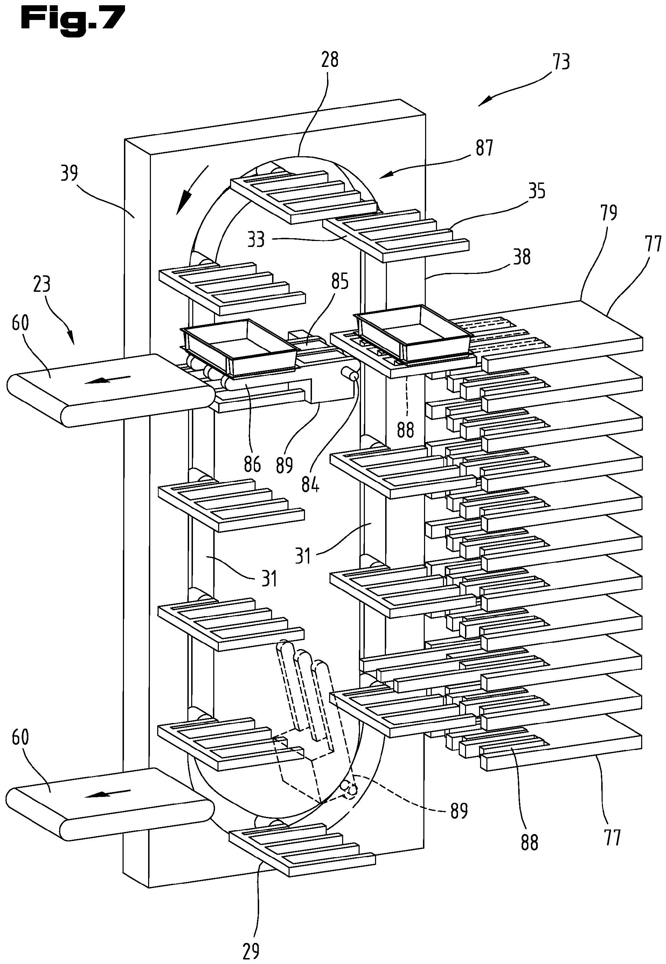

Wie in Fig. 6 und 7 ersichtlich, umfasst das Ladegut-Verteilsystem vorzugsweise ein separates Einlagerungs-Verteilsystem 22, durch welches Ladegüter 3 zum Regallager 71 angefördert werden, und ein separates Auslagerungs-Verteilsystem 23, durch welches für einen Auftrag, insbesondere einen Kommissionierauftrag oder Kundenauftrag benötigte Ladegüter 3 vom Regallager 71 abgefördert werden. Die erste Ladegut-Manipulationsvorrichtung 72 ist an das Einlagerungs-Verteilsystem 22 für Ladegüter 3 und die zweite Ladegut-Manipulationsvorrichtung 73 an das Auslagerungs-Verteilsystem 23 für Ladegüter 3 angeschlossen.

Das Einlagerungs-Verteilsystem 22 umfasst zwei vertikal übereinander angeordnete Einlagerungsbahnen 24 und das Auslagerungs-Verteilsystem 23 zwei vertikal übereinander angeordnete Auslagerungsbahnen 60, welche beispielsweise als Bandförderer, Rollenförderer, bevorzugt mit Staufunktion ausgebildet sind. Die Einlagerungsbahnen 24 und Auslagerungsbahnen 60 sind dabei stationär angeordnet.

Die Ladegut-Manipulationsvorrichtung 72 weist eine vertikal ausgerichtete Umlauffördervorrichtung 76, erste Umsetzvorrichtungen 77 und zweite Umsetzvorrichtungen 78 auf.

Die Umlauffördervorrichtung 76 (Einlagerungs-Umlauffördervorrichtung) ist durch einen Paternoster gebildet und umfasst in Umlaufrichtung - gemäß Pfeil - mit (festem) gegenseitigem Abstand angeordnete und entlang einer geschlossenen Förderumlaufbahn 28 bewegbare Tragrahmen 29 für Ladegüter 3, wie oben beschrieben.

Die rostartigen Tragrahmen 29 unterscheiden sich gegenüber der Ausführung nach den Fig. 1 bis 4 nur dadurch, dass der Basisteil 33 parallel zur Gelenkachse der Gelenkverbindung 30 und die Aufnahmeteile 35 senkrecht zur Gelenkachse sowie mit gegenseitigem Abstand am Basisteil 33 vorragen. Die Aufnahmeteile 35 der Tragrahmen 29 sind vorzugsweise am Basisteil 33 starr befestigte Tragarme, welche auf ihrer Oberseite relativ zur Umlaufrichtung eine horizontale Auflagerebene für zumindest ein Ladegut 3 ausbilden.

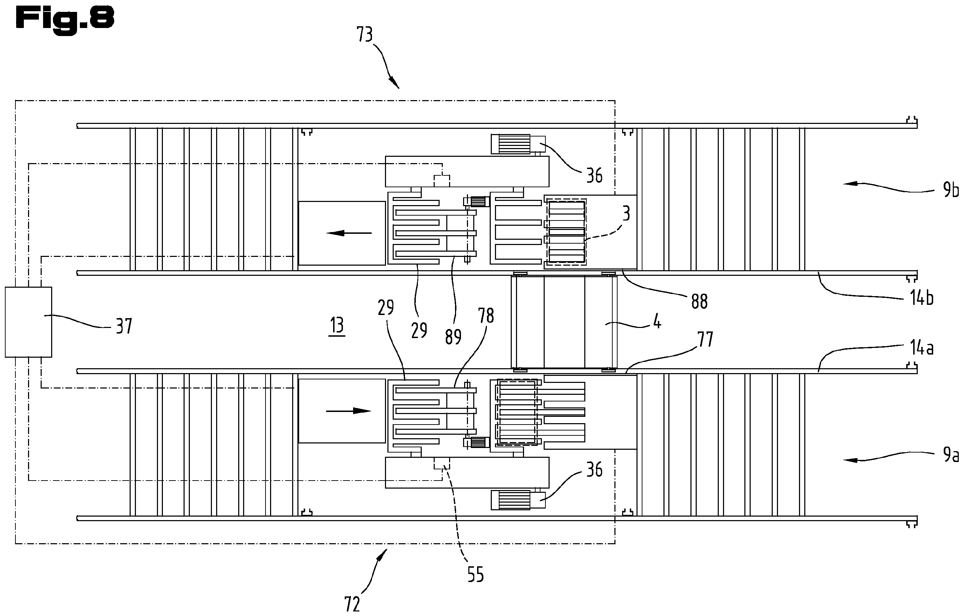

Die ersten Umsetzvorrichtungen 77 sind auf der ersten Umlaufbahnseite 38 entlang des geraden (linken) Umlaufbahnabschnittes 31 angeordnet, wie in Fig. 6 gezeigt. Die Umsetzvorrichtungen 77 umfassen in der jeweiligen Regalebene 11 (Fig. 5) angeordnete und über einen Stellantrieb 79 zwischen einer aus der Förderumlaufbahn 28 herausbewegten Ausgangsstellung (wie in festen Linien eingetragen) und einer in die Förderumlaufbahn 28 hineinbewegten Umsetzstellung (wie in strichlierte Linien eingetragen) bewegbare Aufnahmerahmen 80, auf denen jeweils zumindest ein Ladegut 3 abstellbar ist. Die ersten Umsetzvorrichtungen 77 sind dabei, wie Fig. 8 erkennen lässt, seitlich neben der Regalgasse 10 entlang der Führungsbahnen 14a für das Förderfahrzeug 4 angeordnet. Die Ladegut-Manipulationsvorrichtung 72 kann zusätzlich eine Puffervorrichtung umfassen, die jeweils den Regalebenen 11 der Lagerregale 9a, 9b vorgelagert Pufferplätze 44 ausbildet, wie oben beschrieben.

Jeder Aufnahmerahmen 80 umfasst mit gegenseitigem Abstand parallel angeordnete Aufnahmeteile 81. Der Abstand zwischen benachbarten Aufnahmeteilen 81 ist dabei so bemessen, dass zwischen den Aufnahmeteilen 81 Freiräume entstehen, durch welche die Aufnahmeteile 35 der Tragrahmen 29 hindurchgeführt werden können. Die Aufnahmeteile 81 sind Teleskoparme, welche auf ihrer Oberseite relativ zur Umlaufrichtung der Tragrahmen 29 eine horizontale Auflagerebene für zumindest ein Ladegut 3 ausbilden.

Wie in Fig. 6 auch ersichtlich, sind die zweiten Umsetzvorrichtungen 78 entlang des geraden (rechten) Umlaufbahnabschnittes 31 vorgesehen und der zweiten Umlaufbahnseite 39 zugeordnet. Die Umsetzvorrichtungen 78 sind in vertikal übereinander liegenden Horizontalebenen seitlich neben der Regalgasse 10 zwischen den Umlaufbahnabschnitten 31 angeordnet und umfassen jeweils ein über einen Stellantrieb 82 zwischen einer aus der Förderumlaufbahn 28 herausbewegten Ausgangsstellung (wie in strichlierte Linien anhand der unteren Umsetzvorrichtung eingetragen) und einer in die Förderumlaufbahn 28 hineinbewegten Umsetzstellung (wie in festen Linien anhand der oberen Umsetzvorrichtung eingetragen) bewegbare Fördervorrichtung 83. Die Fördervorrichtung 83, beispielsweise ein Mehrspurförderer, ist nach diesem Ausführungsbeispiel um eine horizontale Lagerachse 84 schwenkbar am Rahmen der Umlauffördervorrichtung 76 gelagert.

Die Fördervorrichtungen 83 umfassen jeweils einen Basisteil 85 und an diesem mit gegenseitigem Abstand vorragende Aufnahmeteile 86. Der Abstand zwischen benachbarten Aufnahmeteilen 86 ist dabei so bemessen, dass zwischen den Aufnahmeteilen 86 Freiräume entstehen, durch welche die Aufnahmeteile 35 der Tragrahmen 29 hindurchgeführt werden können. Die Aufnahmeteile 86 der Fördervorrichtungen 83 sind vorzugsweise am Basisteil 85 gelagerte, gegebenenfalls angetriebene Riemenförderer, welche auf ihrer Oberseite relativ zur Umlaufrichtung der Tragrahmen 29 eine Auflagerebene für zumindest ein Ladegut 3 ausbilden. Die Fördervorrichtung 83 ist vorzugsweise an einen Förderantrieb (nicht dargestellt) gekoppelt, sodass die einzelnen Riemenförderer angetrieben sind. Dadurch kann die Positionierung eines Ladegutes 3 relativ zur Fördervorrichtung 83 verbessert werden.

Die Ladegut-Manipulationsvorrichtung 73 weist eine vertikal ausgerichtete Umlauffördervorrichtung 87, erste Umsetzvorrichtungen 88 und zweite Umsetzvorrichtungen 89 auf. Die Umlauffördervorrichtung 73 (Auslagerungs-Umlauffördervorrichtung) ist ebenfalls durch einen Paternoster gebildet.

Die Umlauffördervorrichtung 73 und die Umsetzvorrichtungen 88, 89 entsprechen jener Ausführung, wie sie in Fig. 6 beschrieben wurde und wird, um Wiederholungen zu vermeiden, auf obige Ausführungen Bezug genommen, wobei für gleiche Teile gleiche Bezugszeichen bzw. Bauteilbezeichnungen verwendet werden.

Das Einlagerungs- und Auslagerungsverfahren von Ladegütern 3 kann gemäß obiger Ausführung erfolgen.

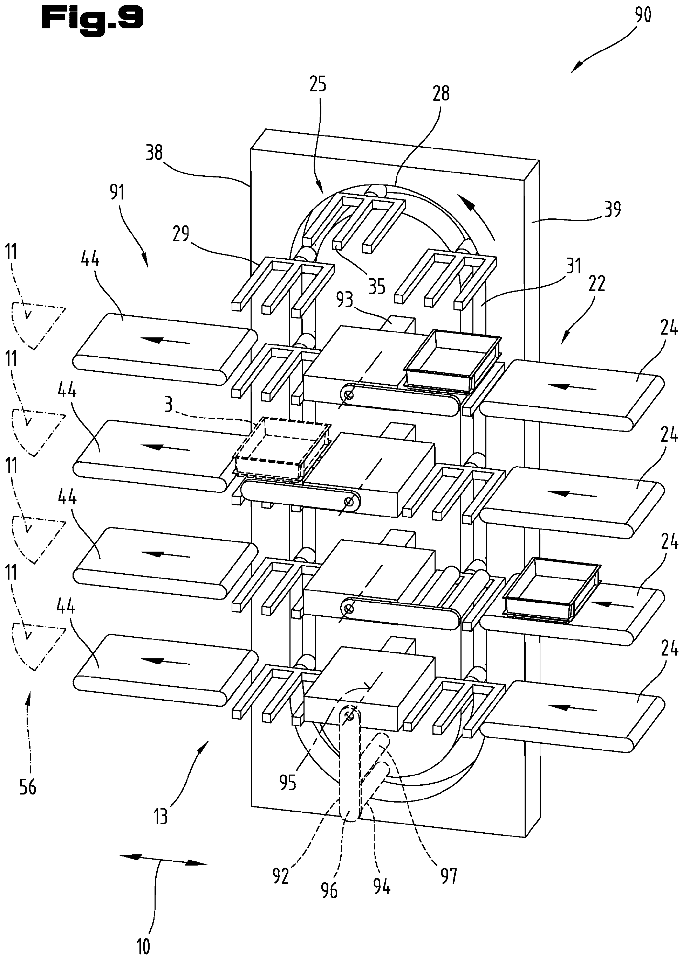

In Fig. 9 ist eine Ladegut-Manipulationsvorrichtung 90 gezeigt, wie sie zur Einlagerung und/oder Auslagerung von Ladegütern 3 eingesetzt werden kann. Diese kann wiederum, wie oben ausgeführt, stirnseitig an einer oder beiden Regallagerseiten 7, 8; 74, 75 oder zwischen den Regallagerseiten 74, 75 seitlich zur Regalgasse 10 angeordnet werden. Werden für die Einlagerung und Auslagerung von Ladegütern 3 jeweils eine Ladegut-Manipulationsvorrichtung 90 verwendet, sind diese zu beiden Seiten der Regalgasse 10 angeordnet. Die Ladegut-Manipulationsvorrichtung 90 ist, wie gezeigt, an das Einlagerungs-Verteilsystem 22 für Ladegüter 3 oder an das Auslagerungs-Verteilsystem 23 für Ladegüter 3 angeschlossen.

Die Ladegut-Manipulationsvorrichtung 90 umfasst eine vertikal ausgerichtete Umlauffördervorrichtung 25, wie sie oben beschrieben wurde, eine Puffervorrichtung 91 und ausschließlich erste Umsetzvorrichtungen 92.

Die Puffervorrichtung 91 ist durch seitlich zur Regalgasse 10 und bevorzugt in jeder Regalebene 11 der Lagerregale 9a, 9b angeordnete Pufferplätze 44 für jeweils zumindest ein Ladegut 3 gebildet. Die Pufferplätze 44 sind jeweils auf einer antreibbaren Fördervorrichtung, wie Staurollenbahn, Staugurtförderer und dgl. ausgebildet, dessen Förderrichtung parallel zur Regalgasse 10 verläuft.

Die Umsetzvorrichtungen 92 sind in vertikal übereinander liegenden Horizontalebenen seitlich neben der Regalgasse 10 zwischen den geraden Umlaufbahnabschnitten 31 angeordnet und umfassen jeweils ein über einen Stellantrieb 93 zwischen einer aus der Förderumlaufbahn 28 herausbewegten Ausgangsstellung (wie in strichlierte Linien anhand der untersten Umsetzvorrichtung eingetragen) und einer in die Förderumlaufbahn 28 hineinbewegten linken/rechten Umsetzstellung (wie in festen Linien anhand den oberen Umsetzvorrichtungen eingetragen) bewegbare Fördervorrichtung 94. Die Fördervorrichtung 94, beispielsweise ein Rollenförderer, ist nach diesem Ausführungsbeispiel um eine horizontale Lagerachse 95 schwenkbar an einem ortsfesten Rahmen gelagert. Der Rahmen ist am Rahmen der Umsetzvorrichtungen 92 befestigt.

Die Fördervorrichtungen 94 umfassen jeweils einen Basisteil 96 (Schwenkarm) und mit gegenseitigem Abstand angeordnete Aufnahmeteile 97, wobei letztere vorzugsweise am Basisteil 96 drehbar gelagerte, gegebenenfalls angetriebene Förderrollen sind, welche auf ihrer Oberseite relativ zur Umlaufrichtung der Tragrahmen 29 eine horizontale Auflagerebene für zumindest ein Ladegut 3 ausbilden. Die Fördervorrichtung 94 ist vorzugsweise an einen Förderantrieb (nicht dargestellt) gekoppelt, wobei zumindest eine Förderrolle angetrieben ist. Der Abstand zwischen benachbarten Aufnahmeteilen 97 ist dabei so bemessen, dass zwischen den Aufnahmeteilen 97 Freiräume entstehen, durch welche die Aufnahmeteile 35 der Tragrahmen 29 hindurchgeführt werden können.

Anhand der Fig. 9 wird ein Einlagerungsvorgang für Ladegüter 3 beschrieben. Dabei wird ein Ladegut 3 auf einer der Einlagerungsbahnen 24 zu einer der, an diese entsprechende Einlagerungsbahn 24 anschließende Umsetzvorrichtung 92 angefördert. Dort angekommen, wird das Ladegut 3 auf die durch den Stellantrieb 93 bereits in die rechte Umsetzstellung (wie in festen Linien an der obersten Umsetzvorrichtung eingetragen) bewegte Fördervorrichtung 94 übergeben. In der Umsetzstellung verlaufen eine Übernahmeebene der Umsetzvorrichtung 92 und eine Förderebene der Einlagerungsbahn 24 in einer, bevorzugt horizontale Ebene. Dabei kann das Ladegut 3 auf der Fördervorrichtung 94 durch die oben beschriebene Ladegut-Haltevorrichtung in eine Übergabeposition positioniert werden.

Wird nun ein "unbelegter" Tragrahmen 29 in Umlaufrichtung - gemäß Pfeil - relativ zur, in die rechte Umsetzstellung bewegte Umsetzvorrichtung 92 angetrieben, werden die Aufnahmeteile 35 der(s) Tragrahmen(s) 29 durch die Freiräume zwischen den Aufnahmeteilen 96 nach oben hindurchbewegt und dabei das Ladegut 3, welches in der Übergabeposition positioniert ist, durch Anheben auf den Tragrahmen 29 übernommen. Sodann wird das Ladegut 3 auf dem Tragrahmen 29 aufliegend in Umlaufrichtung von der zweiten Umlaufbahnseite 39 auf die erste Umlaufbahnseite 38 gefördert und in einer durch die Steuerung 37 festgelegten Regalebene 11 an eine andere der Umsetzvorrichtungen 92 oder gegebenenfalls dieselbe Umsetzvorrichtung 92 übergeben, welche zuvor durch den Stellantrieb 93 in die linke Umsetzstellung (wie in festen Linien an der oberen Umsetzvorrichtung eingetragen) bewegt wurde.

Dabei werden die Aufnahmeteile 35 der(s) Tragrahmen(s) 29 durch die Freiräume zwischen den Aufnahmeteilen 97 nach unten hindurchbewegt und das Ladegut 3, welches auf der Tragrahmen 29 in einer Aufnahmestellung positioniert ist, durch Absenken in Richtung auf die Tragrahmen 29 auf die Fördervorrichtung 94 übergeben. Das Ladegut 3 befindet sich in einer Übernahmeposition auf der Fördervorrichtung 94, wie in strichlierte Linien eingetragen.

Danach wird das Ladegut 3 von der Umsetzvorrichtung 92 durch Antrieb der Fördervorrichtung 94 auf einen Pufferplatz 44 in eine Pufferposition der betreffenden Regalebene 11 bewegt.

Das Förderfahrzeug 4 (nicht gezeigt) wird in der betreffenden Regalebene 11 aus dem Lagerbereich 56 im Regallager 2 in den Umsetzbereich 13 bis zur Pufferposition verfahren, in welcher das Ladegut 3 durch die Lastaufnahmevorrichtung 20 auf das Förderfahrzeug 4 übernommen werden kann. Danach wird das Ladegut 3 vom Förderfahrzeug 4 zu einem freien Stellplatz 12 im Regallager 2 gefördert und mittels der Lastaufnahmevorrichtung 20 am freien Stellplatz 12 abgestellt. Das Einlagern der Ladegüter 3 in das Lagerregal 9a, 9b erfolgt nach dem chaotischen Lagerungsprinzip.

Der Auslagerungsvorgang erfolgt auf umgekehrte Weise, daher ändert sich nur die Auslagerungs-Förderrichtung der Ladegüter 3 in entgegengesetzter Richtung zur Einlagerungs- Förderrichtung.

Daraus wird ersichtlich, dass die Umsetzvorrichtungen 92 eine Ausgangsstellung und eine erste (rechte) Umsetzstellung und zweite (linke) Umsetzstellung einnehmen kann, um einerseits in der rechten Umsetzstellung Ladegüter 3 zwischen einer Einlagerungsbahn 24 und einem Tragrahmen 29 und andererseits zwischen einem Tragrahmen 29 und einem Pufferplatz 44 der Puffervorrichtung 91 zu manipulieren.

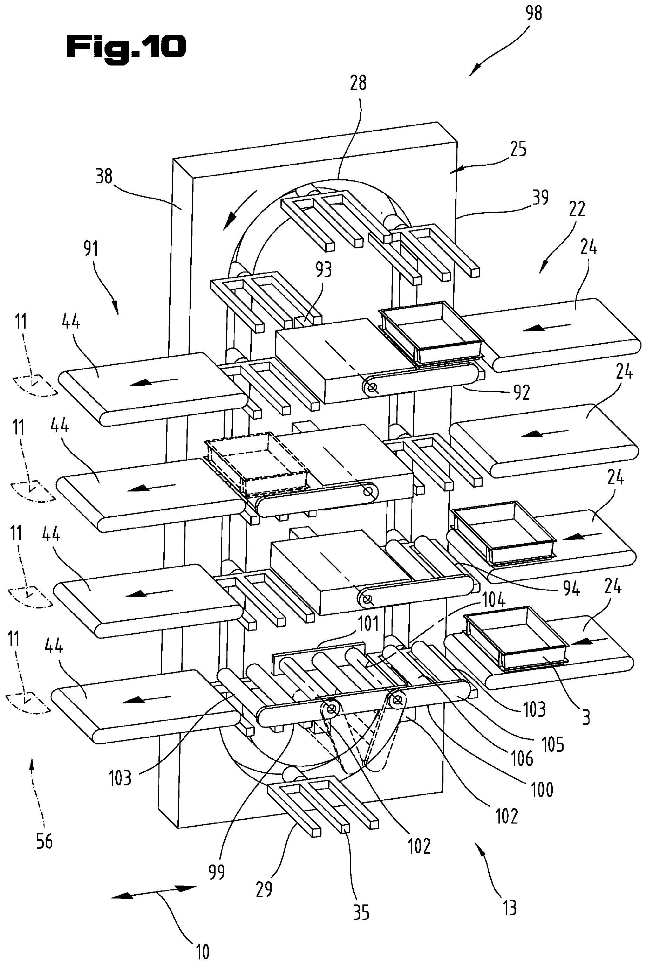

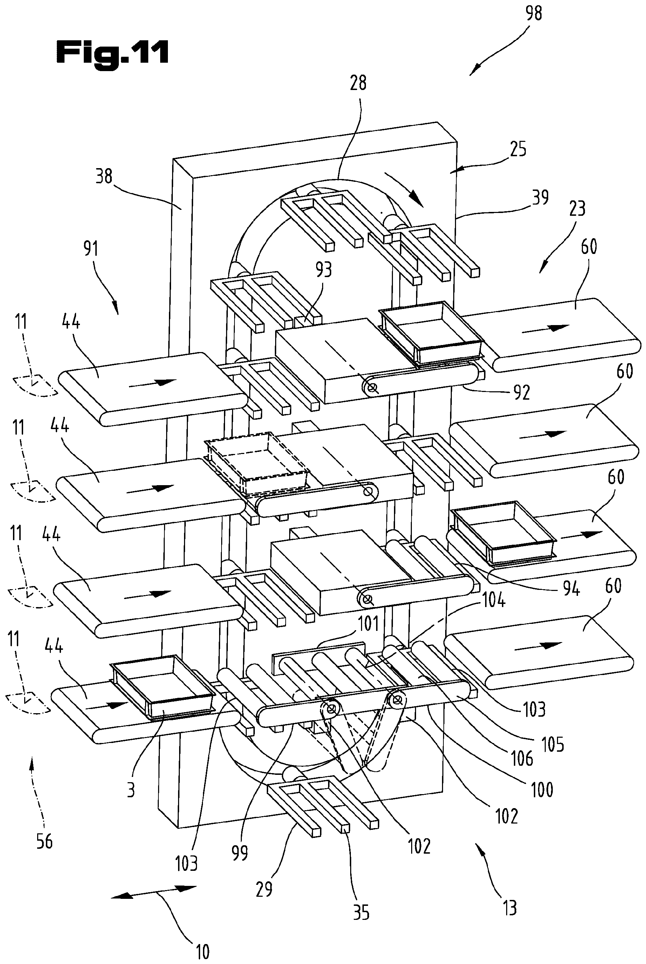

In den Fig. 10 und 11 ist eine Ladegut-Manipulationsvorrichtung 98 gezeigt, wie sie zur Einlagerung und/oder Auslagerung von Ladegütern 3 eingesetzt werden kann. Diese kann wiederum, wie oben ausgeführt, stirnseitig an einer oder beiden Regallagerseiten 7, 8; 74, 75 oder zwischen den Regallagerseiten 74, 75 seitlich zur Regalgasse 10 angeordnet werden. Werden für die Einlagerung und Auslagerung von Ladegütern 3 jeweils eine Ladegut-Manipulationsvorrichtung 98 verwendet, sind diese zu beiden Seiten der Regalgasse 10 angeordnet. Die Ladegut-Manipulationsvorrichtung 98 ist, wie in Fig. 10 gezeigt, an das Einlagerungs-Verteilsystem 22 für Ladegüter 3 oder, wie in Fig. 11 gezeigt, an das Auslagerungs-Verteilsystem 23 für Ladegüter 3 angeschlossen.

Die Ladegut-Manipulationsvorrichtung 98 umfasst eine vertikal ausgerichtete Umlauffördervorrichtung 25, wie sie oben beschrieben wurde, eine Puffervorrichtung 91, in einigen der Regalebenen 11 erste Umsetzvorrichtungen 92 und zumindest in einer der Regalebenen 11 eine erste Umsetzvorrichtung 99 und zweite Umsetzvorrichtung 100.

Wie gezeigt, sind in den oberen Regalebenen 11 jeweils die in Fig. 9 beschriebene Umsetzvorrichtung 92 und in der untersten Regalebene 11 die erste Umsetzvorrichtung 99 und zweite Umsetzvorrichtung 100 vorgesehen. Zwischen der ersten Umsetzvorrichtung 99 und zweiten Umsetzvorrichtung 100 der untersten Regalebene 11 ist eine stationäre Fördervorrichtung 101 angeordnet, beispielsweise ein Rollenförderer, Bandförderer und dgl. Die Fördervorrichtung 101 ist an einen Förderantrieb (nicht dargestellt) gekoppelt.

Die erste Umsetzvorrichtung 99 und zweite Umsetzvorrichtung 100 sind seitlich neben der Regalgasse 10 angeordnet und umfassen jeweils eine über einen Stellantrieb 102 zwischen einer aus der Förderumlaufbahn 28 herausbewegten Ausgangsstellung (wie in strichlierte Linien eingetragen) und einer in die Förderumlaufbahn 28 hineinbewegten linken/rechten Umsetzstellung (wie in festen Linien eingetragen) bewegbare Fördervorrichtung 103. Die Fördervorrichtung 103, beispielsweise ein Rollenförderer, ist nach diesem Ausführungsbeispiel um eine horizontale Lagerachse 104 schwenkbar an einem Rahmen der Fördervorrichtung 101 gelagert. Der Rahmen der Fördervorrichtung 101 ist am Rahmen der Umlauffördervorrichtung 25 befestigt.

Die Fördervorrichtungen 103 umfassen jeweils einen Basisteil 105 (Schwenkarm) und mit gegenseitigem Abstand angeordnete Aufnahmeteile 106, wobei letztere vorzugsweise am Basisteil 105 drehbar gelagerte, gegebenenfalls angetriebene Förderrollen sind, welche auf ihrer Oberseite relativ zur Umlaufrichtung der Tragrahmen 29 eine horizontale Auflagerebene für zumindest ein Ladegut 3 ausbilden. Die Fördervorrichtungen 103 sind vorzugsweise jeweils an einen Förderantrieb (nicht dargestellt) gekoppelt, wobei zumindest eine Förderrolle angetrieben ist. Der Abstand zwischen benachbarten Aufnahmeteilen 106 ist dabei so bemessen, dass zwischen den Aufnahmeteilen 106 Freiräume entstehen, durch welche die Aufnahmeteile 35 der Tragrahmen 29 hindurchgeführt werden können.

Der Einlagerungsvorgang für Ladegüter 3 auf den oberen Regalebenen 11 kann gemäß den Ausführungen nach Fig. 9 erfolgen. Ebenso der Auslagerungsvorgang. Die elektronische Steuerung 37 (nicht gezeigt) kann in einem ersten Betriebszustand die Fördervorrichtungen 103 derart betreiben, dass auch diese die beschriebenen Einlagerungs- und Auslagerungsvorgänge realisieren.

Anderenfalls kann die elektronische Steuerung 37 auch einen zweiten Betriebszustand für die Fördervorrichtungen 103 realisieren. Es ist nämlich auch möglich, wie in Fig. 10 gezeigt, dass ein Ladegut 3 nicht über die Umlauffördervorrichtung 25 zwischen der Einlagerungsbahn 24 und der Puffervorrichtung 91 manipuliert wird, sondern unmittelbar über die Umsetzvorrichtungen 99, 100 und die Fördervorrichtung 101. Hierzu werden beide Fördervorrichtungen 103 durch die Stellantriebe 102 in die Umsetzstellung (wie in festen Linien eingetragen) bewegt, sodass eine durchgehende Förderbahn entsteht, entlang der ein Ladegut 3 gefördert werden kann. Die Ladegut-Manipulation kann dabei derart erfolgen, dass die Umlauffördervorrichtung 25 in der Umlaufbewegung kurzzeitig gestoppt und das Ladegut 3 von der Einlagerungsbahn 24 in Richtung zur Puffervorrichtung 91 kontinuierlich gefördert wird. Andererseits kann die Umlauffördervorrichtung 25 kontinuierlich angetrieben werden und das Ladegut 3 wird durch Steuerung der jeweiligen Förderantriebe der Einlagerungsbahn 24, der Umsetzvorrichtung 100 und Fördervorrichtung 101 innerhalb eines berechneten ersten Zeitfensters zwischen der Einlagerungsbahn 24, der Umsetzvorrichtung 100 und der Fördervorrichtung 101 und innerhalb eines berechneten zweiten Zeitfensters zwischen der Fördervorrichtung 101, Umsetzvorrichtung 99 und der Puffervorrichtung 91 manipuliert, sodass auf der Förderbewegung eines Ladegut 3 zwischen der Einlagerungsbahn 24 und der Puffervorrichtung 91 eine Kollision zwischen dem Ladegut 3 und einem Tragrahmen 29 vermieden wird.

In Fig. 11 wird der Auslagerungsvorgang für die Ladegut-Manipulationsvorrichtung 98 erläutert.

Ist gemäß einem Auftrag ein Ladegut 3 aus dem Regallager 3 erforderlich, werden beide Fördervorrichtungen 103 durch die Stellantriebe 102 in die Umsetzstellung (wie in festen Linien eingetragen) bewegt, sodass eine durchgehende Förderbahn entsteht, entlang der ein Ladegut 3 gefördert werden kann. Die Ladegut-Manipulation kann dabei derart erfolgen, dass die Umlauffördervorrichtung 25 in der Umlaufbewegung kurzzeitig gestoppt und das Ladegut 3 von der Puffervorrichtung 91 in Richtung zur Auslagerungsbahn 60 kontinuierlich gefördert wird. Andererseits kann die Umlauffördervorrichtung 25 kontinuierlich angetrieben werden und das Ladegut 3 wird durch Steuerung der jeweiligen Förderantriebe der Pufferplätze 44, der Umsetzvorrichtung 99 und Fördervorrichtung 101 innerhalb eines berechneten ersten Zeitfensters zwischen der Puffervorrichtung 91 bzw. einem Pufferplatz 44, der Umsetzvorrichtung 99 und der Fördervorrichtung 101 und innerhalb eines berechneten zweiten Zeitfensters zwischen der Fördervorrichtung 101, Umsetzvorrichtung 100 und der Auslagerungsbahn 60 manipuliert, sodass auf der Förderbewegung eines Ladegut 3 zwischen der Puffervorrichtung 91 und der Auslagerungsbahn 60 eine Kollision zwischen dem Ladegut 3 und einem Tragrahmen 29 vermieden wird.

Das Ladegut 3 wird demnach ohne Manipulationsvorgang auf der Umlauffördervorrichtung 98 unmittelbar von der Einlagerungsbahn 24 bzw. Auslagerungsbahn 60 über die Fördervorrichtung 101 und die Umsetzvorrichtungen 99, 100 übergeben. Die Fördervorrichtung 101 und die Umsetzvorrichtungen 99, 100 bilden demnach einen Förderweg zwischen den Einlagerungs- oder Auslagerungsbahn 24, 60 und der Puffervorrichtung 91.

Abschließend sei noch darauf hingewiesen, dass die Umlauffördervorrichtungen 25, 61; 76, 87 unabhängig voneinander steuerbar sind, sodass die Einlagerungs- und Auslagerungsvorgänge im Hinblick auf die Durchsatzleistung des Regallagersystems 1; 70 optimiert werden können.

Durch die oben beschriebenen Ausführungen der Umsetzvorrichtungen 26, 27; 62, 63; 77, 78; 88, 89; 92; 99, 100 ist es zudem möglich, dass die Umlauffördervorrichtungen 25; 61; 76; 87 kontinuierlich, daher ohne Stillstand, angetrieben werden können. Die Umlaufgeschwindigkeit kann von der Steuerung 37 abhängig von der Anzahl der Einlagerungs- und/oder Auslagerungsvorgänge und/oder einem Belegungszustand auf den Tragrahmen 29 variieren. Dadurch kann bei optimierter Durchsatzleistung ein schonender Betrieb der Umlauffördervorrichtungen 25; 61; 76; 87 erreicht werden.

Von Vorteil ist auch, wenn ein Teilungsabstand 64 (Fig. 3a) zwischen in Umlaufrichtung der Umlauffördervorrichtungen 25; 61; 76; 87 aufeinander folgenden Tragrahmen 29 einem Mehrfachen vom Vertikalabstand 65 zwischen übereinander liegenden Regalebenen 11 beträgt. Vorzugsweise entspricht der Teilungsabstand 64 zwischen dem 2-fachen bis 4-fachen des Vertikalabstandes 65. Dadurch kann die Umlauffördervorrichtung 25; 61; 76; 87 auch bei hoher Durchsatzleistung für die Einlagerungs- und/oder Auslagerungsvorgänge mit verhältnismäßig geringer Umlaufgeschwindigkeit betrieben und auch die Bewegungsgeschwindigkeit der Umsetzvorrichtungen 26, 27; 62, 63; 77, 78; 88, 89; 92; 99, 100 auf der Verstellbewegung zwischen der Ausgangs- und Umsetzstellung verhältnismäßig niedrig gewählt werden, was sich positiv auf die Verfügbarkeit der Ladegut-Manipulationsvorrichtung 5; 6; 72; 73; 90; 98 auswirkt.

Eine kompakte Anordnung der Umlauffördervorrichtungen 25; 61; 76; 87 und eine optimierte Durchsatzleistung für die Einlagerungs- und/oder Auslagerungsvorgänge wird auch erreicht, wenn die Anzahl der Tragrahmen 29 zumindest der Anzahl der Regalebenen 11 entspricht.

Auch ist es möglich, dass die Umlauffördervorrichtung 25; 61; 76; 87 durch den Antrieb 36 intermittierend angetrieben wird und innerhalb eines Zeitfensters, zu welchem die Umlaufbewegung der Umlauffördervorrichtung 25; 61; 76; 87 gestoppt ist, gleichzeitig auf zumindest zwei oder mehreren Regalebenen 11 Ladegüter 3 durch die Umsetzvorrichtungen 26, 27; 62, 63; 77, 78; 88, 89; 92; 99, 100 auf oben beschriebene Weise manipuliert werden.

Natürlich wäre es auch denkbar, dass in der jeweiligen Ausführung gemäß den Fig. 1 bis 11 nur eine einzige Ladegut-Manipulationsvorrichtung 5; 75; 90; 98 verwendet wird. Sodann wird ein und dieselbe Umsetzvorrichtung 26; 62; 77; 88; 92; 99 sowohl für einen Einlagerungs- und Auslagerungsvorgang verwendet, wozu der Antrieb 36 reversierbar ausgebildet ist und damit die Umlaufrichtung nach Bedarf geändert werden kann.

In den gezeigten Fig. ist ausschließlich ein Förderfahrzeug 4 dargestellt. Üblicherweise befinden sich aber in der jeweiligen Regalebene 11 ein oder mehrere Förderfahrzeug(e) 4. Ist die Anzahl der Förderfahrzeuge 4 geringer als die Anzahl der Regalebenen 11, so wird eine Förderfahrzeug-Hebevorrichtung (nicht dargestellt) eingesetzt, welche Förderfahrzeuge 4 auf unterschiedliche Regalebenen 11 aufgeben und von unterschiedlichen Regalebenen 11 aufnehmen kann.

Gemäß obiger Definition, wird die Umsetzvorrichtung 26, 27; 62, 63; 77, 78; 88, 89; 92; 99, 100 in der Ausgangsstellung aus der Förderumlaufbahn 28 herausbewegt und in der Umsetzstellung in die Förderumlaufbahn 28 hineinbewegt. In diesem Zusammenhang können die Ausgangsstellung und Umsetzstellung auch so verstanden werden, dass die Umsetzvorrichtung 26, 27; 62, 63; 77, 78; 88, 89; 92; 99, 100 in der Ausgangsstellung aus der Bewegungsbahn der Tragrahmen 29 herausbewegt und in der Umsetzstellung in die Bewegungsbahn der Tragrahmen 29 hineinbewegt ist. Die Bewegungsbahn wird dabei durch die äußere Umrisskontur eines Tragrahmens 29 auf dessen Umlaufbewegung entlang der Förderumlaufbahn 28 definiert.

In den Fig. 5 bis 11 sind weitere und gegebenenfalls für sich eigenständige Ausführungsformen des Regallagersystems gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Der Ordnung halber sei abschließend darauf hingewiesen, dass zum besseren Verständnis des Aufbaus des Regallagersystems dieses bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Regallagersystem | 26 | Umsetzvorrichtung |
| 2 | Regallager | 27 | Umsetzvorrichtung |
| 3 | Ladegut | 28 | Förderumlaufbahn |
| 4 | Förderfahrzeug | 29 | Tragrahmen |
| 5 | Ladegut-Manipulationsvorrichtung | 30 | Gelenkverbindung |
| | | | |
| 6 | Ladegut-Manipulationsvorrichtung | 31 | Umlaufbahnabschnitt |
| 7 | Regallagerseite | 32 | Umlaufbahnabschnitt |
| 8 | Regallagerseite | 33 | Basisteil |
| 9a, 9b | Lagerregal | 34 | Abstand |
| 10 | Regalgasse | 35 | Aufnahmeteil |
| | | | |
| 11 | Regalebene | 36 | Antrieb |
| 12 | Stellplatz | 37 | Steuervorrichtung |
| 13 | Umsetzbereich | 38 | Umlaufbahnseite |
| 14a, 14b | Fahrschiene | 39 | Umlaufbahnseite |
| 15 | Höhenführungsbahn | 40 | Stellantrieb |
| | | | |
| 16 | Seitenführungsbahn | 41 | Aufnahmerahmen |
| 17 | Antriebsrad | 42 | Teleskopstange |
| 18 | Seitenführungsorgan | 43 | Lagervorrichtung |
| 19 | Gehäuserahmen | 44 | Pufferplatz |
| 20 | Lastaufnahmevorrichtung | 45 | Basisteil |
| | | | |
| 21 | Teleskoparme | 46 | Abstand |
| 22 | Einlagerungs-Verteilsystem | 47 | Aufnahmeteil |
| 23 | Auslagerungs-Verteilsystem | 48 | Stellantrieb |
| 24 | Einlagerungsbahn | 49 | Fördervorrichtung |
| 25 | Umlauffördervorrichtung | 50 | Lagerachse |
| 51 | Basisteil | 81 | Aufnahmeteil |
| 52 | Abstand | 82 | Stellantrieb |
| 53 | Aufnahmeteil | 83 | Fördervorrichtung |
| 54 | Ladegut-Haltevorrichtung | 84 | Lagerachse |
| 55 | Überwachungsvorrichtung | 85 | Basisteil |
| | | | |
| 56 | Lagerbereich | 86 | Aufnahmeteil |
| 57 | | 87 | Umlauffördervorrichtung |
| 58 | | 88 | Umsetzvorrichtung |
| 59 | | 89 | Umsetzvorrichtung |
| 60 | Auslagerungsbahn | 90 | Ladegut-Manipulationsvorrichtung |
| | | | |
| 61 | Umlauffördervorrichtung | 91 | Puffervorrichtung |
| 62 | Umsetzvorrichtung | 92 | Umsetzvorrichtung |
| 63 | Umsetzvorrichtung | 93 | Stellantrieb |
| 64 | Teilungsabstand | 94 | Fördervorrichtung |
| 65 | Vertikalabstand | 95 | Lagerachse |
| | | | |
| | | 96 | Basisteil |
| 66 | | 97 | Aufnahmeteil |
| 67 | | 98 | Ladegut-Manipulationsvorrichtung |
| 68 | | 99 | Umsetzvorrichtung |
| 69 | Tribüne | 100 | Umsetzvorrichtung |
| 70 | Regallagersystem | | |
| | | 101 | Fördervorrichtung |
| 71 | Regallager | 102 | Stellantrieb |
| 72 | Ladegut- Manipulationsvorrichtung | 103 | Fördervorrichtung |
| 73 | Ladegut-Manipulationsvorrichtung | 104 | Lagerachse |
| 74 | Regallagerseite | 105 | Basisteil |
| 75 | Regallagerseite | | |
| | | 106 | Aufnahmeteil |
| 76 | Umlauffördervorrichtung | | |
| 77 | Umsetzvorrichtung | | |
| 78 | Umsetzvorrichtung | | |
| 79 | Stellantrieb | | |
| 80 | Aufnahmerahmen | | |

## Patentansprüche

1. Regallagersystem (1; 70) mit
einem Regallager (2) mit benachbart zueinander angeordneten Lagerregalen (9a, 9b), zwischen denen sich zumindest eine Regalgasse (10) erstreckt und welche in übereinander liegenden Regalebenen (11) Stellplätze (12) für Ladegüter (3) aufweisen, und
in den Regalebenen (11) entlang der Regalgasse (10) verlaufenden Führungsbahnen (14a, 14b) und
zumindest einem entlang der Führungsbahnen (14a, 14b) verfahrbaren, autonomen Förderfahrzeug (4) zum Transport der Ladegüter (3) und
zumindest einer ersten Ladegut-Manipulationsvorrichtung (5; 6; 72; 73; 90; 98), umfassend
- mindestens eine Umlauffördervorrichtung (25; 61; 76; 87) mit entlang einer geschlossenen Förderumlaufbahn (28) bewegbaren Tragrahmen (29) für Ladegüter (3) und zumindest einer zweiten Ladegut-Manipulationsvorrichtung (5; 6; 72; 73; 90; 98), umfassend
- mindestens eine Umlauffördervorrichtung (25; 61; 76; 87) mit entlang einer geschlossenen Förderumlaufbahn (28) bewegbaren Tragrahmen (29) für Ladegüter (3),
**dadurch gekennzeichnet, dass** die erste Ladegut-Manipulationsvorrichtung (5; 6; 72; 73; 90; 98) weiterhin umfasst
- erste Umsetzvorrichtungen (26, 27; 62, 63; 77, 78; 88, 89; 92; 99, 100) für Ladegüter (3), welche in der jeweiligen Regalebene (11) zwischen einer aus der Förderumlaufbahn (28) herausbewegten Ausgangsstellung und einer in die Förderumlaufbahn (28) hineinbewegten Umsetzstellung bewegbar sind und welche seitlich neben der Regalgasse (10) entlang der Führungsbahnen (14a, 14b) für das Förderfahrzeug (4) angeordnet sind,
wobei die Tragrahmen (29) und die Umsetzvorrichtungen (26, 27; 62, 63; 77, 78; 88, 89; 92; 99, 100) jeweils einen Basisteil (29; 45; 51; 85; 96; 105) und an diesem vorragende Aufnahmeteile (35; 47; 53; 81; 86; 97; 106) ausbilden, welche Aufnahmeteile (35; 47; 53; 81; 86; 97; 106) dergestalt angeordnet sind, dass diese auf der Relativbewegung zwischen einem Tragrahmen (29) und einer Umsetzvorrichtung (26, 27; 62, 63; 77, 78; 88, 89; 92; 99, 100) komplementär ineinander greifen, und
wobei die zweite Ladegut-Manipulationsvorrichtung (5; 6; 72; 73; 90; 98) weiterhin umfasst
- erste Umsetzvorrichtungen (26, 27; 62, 63; 77, 78; 88, 89; 92; 99, 100) für Ladegüter (3), welche in der jeweiligen Regalebene (11) zwischen einer aus der Förderumlaufbahn (28) herausbewegten Ausgangsstellung und einer in die Förderumlaufbahn (28) hineinbewegten Umsetzstellung bewegbar sind und welche seitlich neben der Regalgasse (10) entlang der Führungsbahnen (14a, 14b) für das Förderfahrzeug (4) angeordnet sind,
wobei die Tragrahmen (29) und die Umsetzvorrichtungen (26, 27; 62, 63; 77, 78; 88, 89; 92; 99, 100) jeweils einen Basisteil (29; 45; 51; 85; 96; 105) und an diesem vorragende Aufnahmeteile (35; 47; 53; 81; 86; 97; 106) ausbilden, welche Aufnahmeteile (35; 47; 53; 81; 86; 97; 106) dergestalt angeordnet sind, dass diese auf der Relativbewegung zwischen einem Tragrahmen (29) und einer Umsetzvorrichtung (26, 27; 62, 63; 77, 78; 88, 89; 92; 99, 100) komplementär ineinander greifen.

2. Regallagersystem nach Anspruch 1, **dadurch gekennzeichnet, dass** die ersten Umsetzvorrichtungen (26; 62; 77; 88) einer ersten Umlaufbahnseite (38) zugeordnet und in der jeweiligen Regalebene (11) zwischen der Umlauffördervorrichtung (25; 61; 76; 87) und dem Regallager (2) vorgesehen sind.

3. Regallagersystem nach Anspruch 1, **dadurch gekennzeichnet, dass** die erste / zweite Ladegut-Manipulationsvorrichtung (5; 6; 72; 73; 90; 98) zusätzlich in der jeweiligen Regalebene (11) zwischen der Umlauffördervorrichtung (25; 61; 76; 87) und dem Regallager (2) angeordnete Puffervorrichtungen (44; 91) für Ladegüter (3) umfasst, welche Puffervorrichtungen (44; 91) seitlich neben der Regalgasse (10) entlang der Führungsbahnen (14a, 14b) für das Förderfahrzeug (4) angeordnet sind.

4. Regallagersystem nach Anspruch 3, **dadurch gekennzeichnet, dass** die Puffervorrichtungen (44) für Ladegüter (3) durch die ersten Umsetzvorrichtungen (26; 62; 77; 88) gebildet sind.

5. Regallagersystem nach einem der Ansprüche 1 bis 4, **dadurch gekennzeichnet, dass** die ersten Umsetzvorrichtungen (92) zumindest in einigen Regalebenen (11), bevorzugt in der jeweiligen Regalebene (11) zwischen einer ersten Umlaufbahnseite (38) und zweiten Umlaufbahnseite (39) gelagert und jeweils wechselweise in Richtung der ersten Umlaufbahnseite (38) in eine erste Umsetzstellung und in Richtung der zweiten Umlaufbahnseite (39) in eine zweite Umsetzstellung bewegbar sind.

6. Regallagersystem nach Anspruch 1 oder 3, **dadurch gekennzeichnet, dass** die erste / zweite Ladegut-Manipulationsvorrichtung (5; 6; 72; 73) zusätzlich zumindest eine zwischen einer aus der Förderumlaufbahn (28) herausbewegten Ausgangsstellung und einer in die Förderumlaufbahn (28) hineinbewegten Umsetzstellung bewegbare zweite Umsetzvorrichtung (27; 63; 78; 89; 100) für Ladegüter (3) umfasst, wobei die zweite Umsetzvorrichtung (26, 27; 62, 63; 77, 78; 88, 89; 92; 99, 100) seitlich neben der Regalgasse (10) entlang der Führungsbahnen (14a, 14b) für das Förderfahrzeug (4) angeordnet ist.

7. Regallagersystem nach Anspruch 1 oder 3, **dadurch gekennzeichnet, dass** die erste / zweite Ladegut-Manipulationsvorrichtung (5; 6; 72; 73) in der jeweiligen Regalebene (11) zwischen einer aus der Förderumlaufbahn (28) herausbewegten Ausgangsstellung und einer in die Förderumlaufbahn (28) hineinbewegten Umsetzstellung bewegbare zweite Umsetzvorrichtungen (27; 63; 78; 89; 100) für Ladegüter (3) umfasst, wobei die zweiten Umsetzvorrichtungen (27; 63; 78; 89; 100) seitlich neben der Regalgasse (10) entlang der Führungsbahnen (14a, 14b) für das Förderfahrzeug (4) angeordnet sind.

8. Regallagersystem nach Anspruch 6 oder 7, **dadurch gekennzeichnet, dass** die Tragrahmen (29) der Umlauffördervorrichtung (25; 61; 76; 87) und die zweite Umsetzvorrichtung(en) (27; 63; 78; 89; 100) jeweils einen Basisteil (29; 45; 51; 85; 96; 105) und an diesem vorragende Aufnahmeteile (35; 47; 53; 81; 86; 97; 106) ausbilden, welche Aufnahmeteile (35; 47; 53; 81; 86; 97; 106) dergestalt angeordnet sind, dass diese auf der Relativbewegung zwischen einem Tragrahmen (29) und der zweiten Umsetzvorrichtung (27; 63; 78; 89; 100) komplementär ineinander greifen.

9. Regallagersystem nach einem der Ansprüche 1 bis 8, **dadurch gekennzeichnet, dass** die Tragrahmen (29) der Umlauffördervorrichtung (25; 61; 76; 87) und/oder die erste und/oder zweite Umsetzvorrichtungen (26, 27; 62, 63; 77, 78; 88, 89; 92; 99, 100) jeweils mit einer Ladegut-Haltevorrichtung (54) versehen sind.

10. Regallagersystem nach einem der Ansprüche 1 bis 7, **dadurch gekennzeichnet, dass** die erste / zweite Ladegut-Manipulationsvorrichtungen (5; 6; 72; 73; 90; 98) jeweils mit zumindest einer Überwachungsvorrichtung (55), insbesondere Sensorik, zum Erfassen eines Belegungszustandes auf einem Tragrahmen (29) versehen sind.

11. Regallagersystem nach einem der Ansprüche 1 bis 10, **dadurch gekennzeichnet, dass** die erste / zweite Ladegut-Manipulationsvorrichtung (5; 6; 90; 98) auf einer der stirnseitigen Regallagerseiten (7, 8) angeordnet ist.

12. Regallagersystem nach einem der Ansprüche 1 bis 10, **dadurch gekennzeichnet, dass** die erste / zweite Ladegut-Manipulationsvorrichtung (72; 73; 90; 98) in das Regallager (2) integriert zwischen den stirnseitigen Regallagerseiten (74, 75) angeordnet ist.

13. Regallagersystem nach einem der Ansprüche 1 bis 12, **dadurch gekennzeichnet, dass** die erste / zweite Ladegut-Manipulationsvorrichtungen (5; 6; 72; 73; 90; 98) zumindest um eine Gassenbreite voneinander distanziert aufgestellt sind und spiegelbildlich einander gegenüberliegen.

14. Regallagersystem nach einem der Ansprüche 1 bis 12, **dadurch gekennzeichnet, dass** die erste / zweite Ladegut-Manipulationsvorrichtungen (5; 6; 72; 73; 90; 98) zumindest um eine Gassenbreite voneinander distanziert aufgestellt sind und in Richtung der Regalgasse (10) axial versetzt angeordnet sind.

15. Regallagersystem nach einem der Ansprüche 1 bis 14, **dadurch gekennzeichnet, dass** die erste / zweite Ladegut-Manipulationsvorrichtung (98) zumindest in einer der Regalebenen (11) eine zwischen einer aus der Förderumlaufbahn (28) herausbewegten Ausgangsstellung und einer in die Förderumlaufbahn (28) hineinbewegten Umsetzstellung bewegbare erste Umsetzvorrichtung (99) für Ladegüter (3) und eine zwischen einer aus der Förderumlaufbahn (28) herausbewegten Ausgangsstellung und einer in die Förderumlaufbahn (28) hineinbewegten Umsetzstellung bewegbare zweite Umsetzvorrichtung (100) für Ladegüter (3) sowie eine die Umsetzvorrichtungen (99, 100) verbindende Fördervorrichtung (101) umfasst, wobei die Umsetzvorrichtungen (99, 100) und die Fördervorrichtung (101) seitlich neben der Regalgasse (10) entlang der Führungsbahnen (14a, 14b) für das Förderfahrzeug (4) angeordnet sind.

## Claims

1. A rack store system (1; 70) having
a rack store (2) with store racks (9a, 9b) arranged adjacent to one another, between which at least one rack aisle (10) extends and which have holding areas (12) for loading goods (3) on vertically adjacent rack levels (11), and
guide lanes (14a, 14b) running along the rack aisle (10) on the rack levels (11) and
at least one autonomous conveyor vehicle (4) for transporting the loading goods (3) which is movable along the guide lanes (14a, 14b) and
at least a first loading good manipulation device (5; 6; 72; 73; 90; 98), comprising
- at least one revolving conveyor device (25; 61; 76; 87) with support frames (29) for loading goods (3) which are movable along a closed revolving conveyor lane (28) and at least a second loading good manipulation device (5; 6; 72; 73; 90; 98), comprising
- at least one revolving conveyor device (25; 61; 76; 87) with support frames (29) for loading goods (3) which are movable along a closed revolving conveyor lane (28), **characterized in that** the first loading good manipulation device (5; 6; 72; 73; 90; 98) further comprises
first transfer devices (26, 27; 62, 63; 77, 78; 88, 89; 92; 99, 100) for loading goods (3), which are movable on the respective rack level (11) between an initial position moved out of the revolving conveyor device (28) and a transfer position moved into the revolving conveyor device (28) and which are arranged laterally adjacent to the rack aisle (10) along the guide lanes (14a, 14b) for the conveyor vehicle (4),
wherein the support frames (29) and the transfer devices (26, 27; 62, 63; 77, 78; 88, 89; 92; 99, 100) each form a base portion (29; 45; 51; 85; 96; 105) and accommodating elements (35; 47; 53; 81; 86; 97; 106) protruding from same, which accommodating elements (35; 47; 53; 81; 86; 97; 106) are arranged in such a way that they engage with one another in a complementary manner in the relative motion between a support frame (29) and a transfer device (26, 27; 62, 63; 77, 78; 88, 89; 92; 99, 100), and
wherein the second loading good manipulation device (5; 6; 72; 73; 90; 98) further comprises
- first transfer devices (26, 27; 62, 63; 77, 78; 88, 89; 92; 99, 100) for loading goods (3), which are movable on the respective rack level (11) between an initial position moved out of the revolving conveyor device (28) and a transfer position moved into the revolving conveyor device (28) and which are arranged laterally adjacent to the rack aisle (10) along the guide lanes (14a, 14b) for the conveyor vehicle (4),
wherein the support frames (29) and the transfer devices (26, 27; 62, 63; 77, 78; 88, 89; 92; 99, 100) each form a base portion (29; 45; 51; 85; 96; 105) and accommodating elements (35; 47; 53; 81; 86; 97; 106) protruding from same, which accommodating elements (35; 47; 53; 81; 86; 97; 106) are arranged in such a way that they engage with one another in a complementary manner in the relative motion between a support frame (29) and a transfer device (26, 27; 62, 63; 77, 78; 88, 89; 92; 99, 100).

2. The rack store system according to claim 1, **characterized in that** the first transfer devices (26; 62; 77; 88) are allocated to a first side of the revolving lane (38) and provided on the respective rack level (11) between the revolving conveyor device (25; 61; 76; 87) and the rack store (2).

3. The rack store system according to claim 1, **characterized in that** the first/second loading good manipulation device (5; 6; 72; 73; 90; 98) additionally comprises buffer devices (44; 91) for loading goods (3) arranged on the respective rack level (11) between the revolving conveyor device (25; 61; 76; 87) and the rack store (2), which buffer devices (44; 91) are arranged laterally adjacent to the rack aisle (10) along the guide lanes (14a, 14b) for the conveyor vehicle (4).

4. The rack store system according to claim 3, **characterized in that** die buffer devices (44) for loading goods (3) are formed by the first transfer devices (26; 62; 77; 88).

5. The rack store system according to any one of the claims 1 to 4, **characterized in that** the first transfer devices (92) on at least some rack levels (11) preferably are supported between a first side of the revolving lane (38) and second side of the revolving lane (39) on the respective rack level (11), and movable alternately to each other in the direction of the first side of the revolving lane (38) into a first transfer position and in the direction of the second side of the revolving lane (39) into a second transfer position.

6. The rack store system according to claim 1 or 3, **characterized in that** the first/second loading good manipulation device (5; 6; 72; 73) additionally comprises at least a second transfer device (27; 63; 78; 89; 100) for loading goods (3) movable between an initial position moved out of the revolving conveyor device (28) and a transfer position moved into the revolving conveyor device (28), wherein the second transfer device (26, 27; 62, 63; 77, 78; 88, 89; 92; 99, 100) is arranged laterally adjacent to the rack aisle (10) along the guide lanes (14a, 14b) for the conveyor vehicle (4).

7. The rack store system according to claim 1 or 3, **characterized in that** the first/second loading good manipulation device (5; 6; 72; 73) comprises on the respective rack level (11) second transfer devices (27; 63; 78; 89; 100) for loading goods (3) movable between an initial position moved out of the revolving conveyor device (28) and a transfer position moved into the revolving conveyor device (28), wherein the second transfer devices (27; 63; 78; 89; 100) are arranged laterally adjacent to the rack aisle (10) along the guide lanes (14a, 14b) for the conveyor vehicle (4).

8. The rack store system according to claim 6 or 7, **characterized in that** the support frames (29) of the revolving conveyor device (25; 61; 76; 87) and the second transfer device(s) (27; 63; 78; 89; 100) each form a base portion (29; 45; 51; 85; 96; 105) and accommodating elements (35; 47; 53; 81; 86; 97; 106) protruding from same, which accommodating elements (35; 47; 53; 81; 86; 97; 106) are arranged in such a way that they engage with one another in a complementary manner in the relative motion between a support frame (29) and the second transfer device (27; 63; 78; 89; 100).

9. The rack store system according to any one of the claims 1 to 8, **characterized in that** the support frames (29) of the revolving conveyor device (25; 61; 76; 87) and/or the first and/or second transfer devices (26, 27; 62, 63; 77, 78; 88, 89; 92; 99, 100) are each provided with a loading good holding device (54).

10. The rack store system according to any one of the claims 1 to 7, **characterized in that** the first/second loading good manipulation devices (5; 6; 72; 73; 90; 98) are each provided with at least one monitoring device (55), in particular a sensor system, for acquiring a state of occupancy on a support frame (29).

11. The rack store system according to any one of the claims 1 to 10, **characterized in that** the first/second loading good manipulation device (5; 6; 90; 98) is arranged on one of the front sides of the rack store (7, 8).

12. The rack store system according to any one of the claims 1 to 10, **characterized in that** the first/second loading good manipulation device (72; 73; 90; 98) is arranged integrated into the rack store (2) between the front sides of the rack store (74, 75).

13. The rack storage system according to any one of the claims 1 to 12, **characterized in that** the first/second loading good manipulation devices (5; 6; 72; 73; 90; 98) are installed at a distance of at least one aisle width from one another and are mutual mirror images facing one another.

14. The rack store system according to any one of the claims 1 to 12, **characterized in that** the first/second loading good manipulation devices (5; 6; 72; 73; 90; 98) are installed at a distance of at least one aisle width from one another and are arranged axially displaced in the direction of the rack aisle (10).

15. The rack store system according to any one of the claims 1 to 14, **characterized in that** the first/second loading good manipulation device (98) comprises on at least one of the rack levels (11) a first transfer device (99) for loading goods (3) movable between an initial position moved out of the revolving conveyor device (28) and a transfer position moved into the revolving conveyor device (28) and a second transfer device (100) for loading goods (3) movable between an initial position moved out of the revolving conveyor device (28) and a transfer position moved into the revolving conveyor device (28) as well as a conveying device (101) connecting the transfer devices (99, 100), wherein the transfer devices (99, 100) and the conveying device (101) are arranged laterally adjacent to the rack aisle (10) along the guide lanes (14a, 14b) for the conveyor vehicle (4).

## Revendications

1. Système de stockage à rayonnages (1 ; 70) avec un magasin à rayonnages (2) avec des rayonnages de stockage (9a, 9b) disposés de manière adjacente entre eux, entre lesquels s'étend une allée de rayonnages (10) et qui comprennent des emplacements (12) pour des marchandises (3) dans des niveaux de rayonnages (11) superposés et
des pistes de guidage (14a, 14b) s'étendant dans les niveaux de rayonnages (11) le long de l'allée de rayonnages (10) et
au moins un véhicule de convoyage autonome (4), pouvant se déplacer le long des pistes de guidage (14a, 14b), pour le transport des marchandises (3) et
au moins un premier dispositif de manipulation de marchandises (5 ; 6 ; 72 ; 73 ; 90 ; 98) comprenant
- au moins un dispositif de convoyage à circulation (25 ; 61 ; 76 ; 87) avec des châssis porteurs (29) mobiles le long d'une piste de circulation de convoyage (28) pour des marchandises (3)
et au moins un deuxième dispositif de manipulation de marchandises (5 ; 6 ; 72 ; 73 ; 90 ; 98) comprenant
- au moins un dispositif de convoyage à circulation (25 ; 61 ; 76 ; 87) avec des châssis porteurs (29) mobiles le long d'une piste de circulation de convoyage (28) pour des marchandises (3)
**caractérisé en ce que** le premier dispositif de manipulation de marchandises (5 ; 6 ; 72 ; 73 ; 90 ; 98) comprend en outre
- des premiers dispositifs de transfert (26, 27 ; 62, 63 ; 77, 78 ; 88, 89 ; 92 ; 99, 100) pour des marchandises (3), qui sont mobiles chacun dans le niveau de rayonnage (11) correspondant entre une position de départ sortie de la piste de circulation de convoyage (28) et une position de transfert entrée dans la piste de circulation de convoyage (28) et qui sont disposés latéralement à côté de l'allée de rayonnages (10) le long des pistes de guidage (14a, 14b) pour le véhicule de convoyage (4),
les châssis porteurs (29) et les dispositifs de transfert (26, 27 ; 62, 63 ; 77, 78 ; 88, 89 ; 92 ; 99, 100) formant chacun une partie de base (29 ; 45 ; 51 ; 85 ; 96 ; 105) et des parties de logement (35 ; 47 ; 53 ; 81 ; 86 ; 97 ; 106) dépassant au niveau de celle-ci, ces parties de logement (35 ; 47 ; 53 ; 81 ; 86 ; 97 ; 106) étant disposées de façon à s'emboîter de manière complémentaire entre elles lors du mouvement relatif entre un châssis porteur (29) et un dispositif de transfert (26, 27 ; 62, 63 ; 77, 78 ; 88, 89 ; 92 ; 99, 100) et
le deuxième dispositif de manipulation de marchandises (5 ; 6 ; 72 ; 73 ; 90 ; 98) comprend en outre
- des premiers dispositifs de transfert (26, 27 ; 62, 63 ; 77, 78 ; 88, 89 ; 92 ; 99, 100) pour des marchandises (3), qui sont mobiles chacun dans le niveau de rayonnage (11) correspondant entre une position de départ sortie de la piste de circulation de convoyage (28) et une position de transfert entrée dans la piste de circulation de convoyage (28) et qui sont disposés latéralement à côté de l'allée de rayonnages (10) le long des pistes de guidage (14a, 14b) pour le véhicule de convoyage (4),
les châssis porteurs (29) et les dispositifs de transfert (26, 27 ; 62, 63 ; 77, 78 ; 88, 89 ; 92 ; 99, 100) formant chacun une partie de base (29 ; 45 ; 51 ; 85 ; 96 ; 105) et des parties de logement (35 ; 47 ; 53 ; 81 ; 86 ; 97 ; 106) dépassant au niveau de celle-ci, ces parties de logement (35 ; 47 ; 53 ; 81 ; 86 ; 97 ; 106) étant disposées de façon à s'emboîter de manière complémentaire entre elles lors du mouvement relatif entre un châssis porteur (29) et un dispositif de transfert (26, 27 ; 62, 63 ; 77, 78 ; 88, 89 ; 92 ; 99, 100).

2. Système de stockage à rayonnages selon la revendication 1, **caractérisé en ce que** les premiers dispositifs de transfert (26 ; 62 ; 77 ; 88) correspondent à un premier côté de piste de circulation (38) et sont prévus dans le niveau de rayonnage (11) correspondant entre le dispositif de convoyage à circulation (25 ; 61 ; 76 ; 87) et le magasin à rayonnages (2).

3. Système de stockage à rayonnages selon la revendication 1, **caractérisé en ce que** le premier/deuxième dispositif de manipulation de marchandises (5 ; 6 ; 72 ; 73 ; 90 ; 98) comprend en outre, dans le niveau de rayonnage (11) correspondant, des dispositifs tampons (44 ; 91) pour marchandises (3), disposés entre le dispositif de convoyage à circulation (25 ; 61 ; 76 ; 87) et le magasin à rayonnages (2), ces dispositifs tampons (44 ; 91) étant disposés latéralement à côté de l'allée de rayonnages (10) le long des pistes de guidage (14a, 14b) pour le véhicule de convoyage (4).

4. Système de stockage à rayonnages selon la revendication 3, **caractérisé en ce que** les dispositifs tampons (44) pour marchandises (3) sont constitués des premiers dispositifs de transfert (26 ; 62 ; 77 ; 88).

5. Système de stockage à rayonnages selon l'une des revendications 1 à 4, **caractérisé en ce que** les premiers dispositifs de transfert (92) sont logés au moins dans certains niveaux de rayonnages (11), de préférence dans le niveau rayonnages (11) correspondant entre un premier côté de piste de circulation (38) et un deuxième côté de piste de circulation (39) et sont mobiles respectivement en alternance dans la direction du premier côté de piste de circulation (38) vers une première position de transfert et dans la direction du deuxième côté de piste de circulation (39) vers une deuxième position de transfert.

6. Système de stockage à rayonnages selon la revendication 1 ou 3, **caractérisé en ce que** le premier/deuxième dispositif de manipulation de marchandises (5 ; 6 ; 72 ; 73) comprend en outre au moins un deuxième dispositif de transfert (27 ; 63 ; 78 ; 89 ; 100) pour marchandises (3), mobile entre une position de départ sortie de la piste de circulation de convoyage (28) et une position de transfert rentrée dans la piste de circulation de convoyage (28), le deuxième dispositif de transfert (26, 27 ; 62, 63 ; 77, 78 ; 88, 89 ; 92 ; 99, 100) étant disposé latéralement à côté de l'allée de rayonnages (10) le long des pistes de guidage (14a, 14b) pour le véhicule de convoyage (4).

7. Système de stockage à rayonnages selon la revendication 1 ou 3, **caractérisé en ce que** le premier/deuxième dispositif de manipulation de marchandises (5 ; 6 ; 72 ; 73) comprend, dans le niveau de rayonnages (11) correspondant, des deuxièmes dispositifs de transfert (27 ; 63 ; 78 ; 89 ; 100) pour marchandises (3), mobiles entre une position de départ sortie de la piste de circulation de convoyage (28) et une position de transfert rentrée dans la piste de circulation de convoyage (28), les deuxièmes dispositifs de transfert (27 ; 63 ; 78 ; 89 ; 100) étant disposés latéralement à côté de l'allée de rayonnages (10) le long des pistes de guidage (14a, 14b) pour le véhicule de convoyage (4).

8. Système de stockage à rayonnages selon la revendication 6 ou 7, **caractérisé en ce que** les châssis porteurs (29) du dispositif de convoyage à circulation (25 ; 61 ; 76 ; 87) et le(s) deuxième(s) dispositif(s) de transfert (27 ; 63 ; 78 ; 89 ; 100) constituent chacun une partie de base (29 ; 45 ; 51 ; 85 ; 96 ; 105) et des parties de logement (35 ; 47 ; 53 ; 81 ; 86 ; 97 ; 106), ces parties de logements (35 ; 47 ; 53 ; 81 ; 86 ; 97 ; 106) étant disposées de façon à s'emboîter de manière complémentaire entre elles lors du mouvement relatif entre un châssis porteur (29) et le deuxième dispositif de transfert (27 ; 63 ; 78 ; 89 ; 100).

9. Système de stockage à rayonnages selon l'une des revendications 1 à 8, **caractérisé en ce que** les châssis porteurs (29) du dispositif de convoyage à circulation (25 ; 61 ; 76 ; 87) et/ou les premiers et/ou les deuxièmes dispositifs de transfert (26, 27 ; 62, 63 ; 77, 78 ; 88, 89 ; 92 ; 99, 100) sont munis chacun d'un dispositif de maintien de marchandises (54).

10. Système de stockage à rayonnages selon l'une des revendications 1 à 7, **caractérisé en ce que** les premiers/deuxièmes dispositifs de manipulation de marchandises (5 ; 6 ; 72 ; 73 ; 90 ; 98) sont munis chacun d'au moins un dispositif de surveillance (55), plus particulièrement, des capteurs, pour la détermination d'un étant d'occupation sur un châssis porteur (29).

11. Système de stockage à rayonnages selon l'une des revendications 1 à 10, **caractérisé en ce que** le premier/deuxième dispositif de manipulation de marchandises (5 ; 6 ; 90 ; 98) est disposé sur un des côtés frontaux du magasin à rayonnages (7, 8).

12. Système de stockage à rayonnages selon l'une des revendications 1 à 10, **caractérisé en ce que** le premier/deuxième dispositif de manipulation de marchandises (72 ; 73 ; 90 ; 98) est intégré dans le magasin à rayonnages (2) entre les côtés frontaux du magasin à rayonnages (74, 75).

13. Système de stockage à rayonnages selon l'une des revendications 1 à 12, **caractérisé en ce que** les premiers/deuxièmes dispositifs de manipulation de marchandises (5 ; 6 ; 72 ; 73 ; 90 ; 98) sont posés à une distance entre eux d'au moins une largeur d'allée et sont disposés en miroir les uns en face des autres.

14. Système de stockage à rayonnages selon l'une des revendications 1 à 12, **caractérisé en ce que** les premiers/deuxièmes dispositifs de manipulation de marchandises (5 ; 6 ; 72 ; 73 ; 90 ; 98) sont posés à une distance entre eux d'au moins une largeur d'allée et sont disposés de manière décalée axialement dans la direction de l'allée de rayonnages (10).

15. Système de stockage à rayonnages selon l'une des revendications 1 à 14, **caractérisé en ce que** le premier/deuxième dispositif de manipulation de marchandises (98) comprend, au moins dans un des niveaux de rayonnages (11), un premier dispositif de transfert (99) pour marchandises (3), mobile entre une position de départ sortie de la piste de circulation de convoyage (28) et une position de transfert rentrée dans la piste de circulation de convoyage (28) et un deuxième dispositif de transfert (100) pour marchandises (3), mobile entre une position de départ sortie de la piste de circulation de convoyage (28) et une position de transfert rentrée dans la piste de circulation de convoyage (28), ainsi qu'un dispositif de convoyage (101) reliant les dispositifs de transfert (99, 100), les dispositifs de transfert (99, 100) et le dispositif de convoyage (101) étant disposés latéralement à côté de l'allée de rayonnages (10) le long des pistes de guidage (14a, 14b) pour le véhicule de convoyage (4).
